(19) **Europäisches Patentamt European Patent Office Office européen des brevets**

(11) **EP 4 756 389 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
**G01H 5/00** (2006.01)     **G01N 29/07** (2006.01)
**G01N 29/44** (2006.01)

(21) Application number: **24848804.1**

(52) Cooperative Patent Classification (CPC):
**G01H 5/00; G01N 29/07; G01N 29/44**

(22) Date of filing: **04.07.2024**

(86) International application number:
**PCT/JP2024/024159**

(87) International publication number:
**WO 2025/028145 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023125979**

(71) Applicant: **Konica Minolta, Inc.**
**Tokyo 100-7015 (JP)**

(72) Inventors:
• **AOKI, Megumi**
  **Tokyo 100-7015 (JP)**

• **KAGAWA, Tetsuya**
  **Tokyo 100-7015 (JP)**
• **JONO, Junichi**
  **Tokyo 100-7015 (JP)**
• **WATANABE, Yasuhito**
  **Tokyo 100-7015 (JP)**
• **FUSE, Masaru**
  **Tokyo 100-7015 (JP)**

(74) Representative: **MFG Patentanwälte Meyer-Wildhagen Meggle-Freund Gerhard PartG mbB**
**Amalienstraße 62**
**80799 München (DE)**

(54) **WAVE-MOTION PROPAGATION SPEED MEASUREMENT METHOD, WAVE-MOTION PROPAGATION SPEED MEASUREMENT DEVICE, AND PROGRAM**

(57)     In the present invention, an acoustic wave is transmitted to a first surface S1 of an object S having acoustic anisotropy by a transmission unit 11a disposed on the first surface S1. A plurality of acoustic waves propagating through the inside of the object S at different angles are received by a reception unit 11b disposed on the first surface S1 of the object S or a second surface S2 opposing the first surface S1, and thereby a plurality of pieces of reception information are acquired. A plurality of propagation velocity vectors are calculated based on the plurality of pieces of reception information. A propagation wavefront shape model corresponding to the acoustic anisotropy of the object S is determined based on the plurality of propagation velocity vectors. A horizontal propagation velocity parallel to the first surface S1 is calculated based on the propagation wavefront shape model.

FIG.2

**Description**

Technical Field

The present invention relates to a wave propagation velocity measuring method, a wave propagation velocity measuring apparatus, and a program.

Background Art

Conventionally, as a method for evaluating mechanical properties of an object, there has been known a method for measuring the propagation velocity of elastic waves having a high correlation with the mechanical properties from the viewpoint of a degree of freedom of the object and safety in operation.

For example, Patent Document 1 describes an elastic wave inspection system that irradiates a subject with elastic waves and measures the propagation velocity of the elastic waves from the propagation time. Furthermore,

Patent Document 2 describes an elastic constant measuring apparatus that calculates a plurality of propagation velocities by propagating elastic waves to a plate to be measured from respective directions and calculates an elastic constant of the plate to be measured based on the plurality of propagation velocities.

Citation List

Patent Literature

Patent Document 1: Japanese Unexamined Patent Application Publication No. 2008-286622
Patent Document 2: Japanese Unexamined Patent Application Publication No. 2007-127547

Summary of Invention

Technical Problem

Since the propagation velocity of elastic waves has a unique relationship with the elastic modulus of an object as a propagation medium, a method for nondestructively inspecting the elastic strength properties of the object by using this phenomenon is known. On the other hand, some composite materials, such as fiber-reinforced resin, and some metals exhibit "anisotropy" in which the strength properties differ depending on the direction of applied stress. Such materials have "acoustic anisotropy" in which the propagation velocity of the elastic waves also varies with the direction, depending on the elastic strength. Therefore, in order to inspect the elastic strength based on the propagation velocity of the elastic waves as described above, it is necessary to match the propagation direction of the elastic waves with the assumed direction of stress application. That is, for example, when the elastic strength in the longitudinal direction of an object having an elongated shape is inspected, the elastic waves need to be propagated in that direction. However, when the propagation attenuation of the elastic waves in the target is great, sufficient reception quality cannot be ensured, and the propagation velocity cannot be measured. Furthermore, the invention of Patent Document 1 is intended to measure propagation velocities in a plurality of directions in order to reduce measurement variation. However, the propagation velocities measured in the plurality of directions are arithmetically averaged, and therefore, materials having acoustic anisotropy cannot be evaluated. The invention of Patent Document 2 enables measurement of the elastic modulus of a material having acoustic anisotropy in each direction. However, the invention has a problem that elastic waves having different properties, such as longitudinal waves and transverse waves, need to be propagated in different directions, which takes time and effort for measurement.

The present invention has been made in view of such circumstances. An object of the present invention is to provide a wave propagation velocity measuring method, a wave propagation velocity measuring apparatus, and a program capable of more simply measuring the propagation velocity of elastic waves in a predetermined direction of an object having acoustic anisotropy.

Solution to Problem

In order to solve the above-described problem, the invention recited in claim 1 is a wave propagation velocity measuring method comprising: transmitting, by a transmitter disposed on a first surface of an object having acoustic anisotropy, an elastic wave to the first surface; acquiring two or more pieces of reception information by receiving, by a

**EP 4 756 389 A1**

receiver disposed on the first surface of the object or a second surface facing the first surface, respective two or more of the elastic wave propagating at respective different angles within the object; calculating two or more propagation velocity vectors based on the respective two or more pieces of reception information; determining a propagation wavefront shape model corresponding to the acoustic anisotropy of the object based on the two or more propagation velocity vectors; and calculating a horizontal propagation velocity parallel to the first surface based on the propagation wavefront shape model.

The invention recited in claim 2 is the wave propagation velocity measuring method according to claim 1, wherein the two or more pieces of reception information include information on respective propagation times of the respective two or more of the elastic wave propagating within the object, and the calculating the two or more propagation velocity vectors includes calculating the two or more propagation velocity vectors based on the respective two or more pieces of reception information, information on respective two or more arrangement spacings between the transmitter and the receiver in a direction parallel to the first surface, and thickness information of the object.

The invention recited in claim 3 is the wave propagation velocity measuring method according to claim 1, further comprising calculating the propagation wavefront shape model based on the two or more propagation velocity vectors.

The invention recited in claim 4 is the wave propagation velocity measuring method according to claim 1, further comprising selecting the propagation wavefront shape model from a plurality of propagation wavefront shape model candidates based on the two or more propagation velocity vectors.

The invention recited in claim 5 is the wave propagation velocity measuring method according to claim 2, wherein the thickness information of the object is either a provisional thickness value that is a provisional length of the object in a thickness direction or an actual thickness value that is an actual length of the object in the thickness direction.

The invention recited in claim 6 is the wave propagation velocity measuring method according to claim 5, wherein, when the thickness information of the object is the actual thickness value, the method further comprises calculating, in addition to the horizontal propagation velocity, a vertical propagation velocity perpendicular to the first surface.

The invention recited in claim 7 is the wave propagation velocity measuring method according to claim 2, wherein the acquiring the two or more pieces of reception information includes adjusting the respective two or more arrangement spacings between the transmitter and the receiver.

The invention recited in claim 8 is the wave propagation velocity measuring method according to claim 7, wherein the adjusting includes selecting from a plurality of sensor elements for transmitting and/or receiving pre-disposed at predetermined positions and/or in a predetermined shape.

The invention recited in claim 9 is the wave propagation velocity measuring method according to claim 1, wherein the acoustic anisotropy of the object is uniaxial acoustic anisotropy, and the method further comprises: calculating a first propagation velocity vector with the transmitter and the receiver disposed in an acoustically isotropic in-plane direction in which the object exhibits acoustic isotropy; calculating a vertical propagation velocity perpendicular to the first surface based on the first propagation velocity vector; calculating a second propagation velocity vector with the transmitter and the receiver disposed in a direction in an acoustically anisotropic plane, the object exhibiting the acoustic anisotropy in the direction; and calculating a horizontal propagation velocity in the acoustically anisotropic plane based on the vertical propagation velocity, the second propagation velocity vector, and the propagation wavefront shape model corresponding to the acoustic anisotropy of the object.

The invention recited in claim 10 is the wave propagation velocity measuring method according to claim 1, further comprising: changing a positional arrangement of the transmitter and the receiver and/or an arrangement direction of the transmitter and the receiver; and measuring the horizontal propagation velocity for each of the positional arrangement and/or the arrangement direction.

The invention recited in claim 11 is the wave propagation velocity measuring method according to claim 10, further comprising analyzing the horizontal propagation velocity corresponding to the positional arrangement and/or the arrangement direction.

The invention recited in claim 12 is the wave propagation velocity measuring method according to claim 11, further comprising acquiring statistical data that includes at least one of a maximum value, a minimum value, an average value, a variance value, or a principal component analysis result of the horizontal propagation velocity corresponding to the arrangement direction for each of the positional arrangement.

The invention recited in claim 13 is the wave propagation velocity measuring method according to claim 12, further comprising deriving an arrangement direction in which the horizontal propagation velocity becomes a maximum value and/or a minimum value for each of the positional arrangement.

The invention recited in claim 14 is the wave propagation velocity measuring method according to claim 10, further comprising displaying the positional arrangement and/or the arrangement direction, and a magnitude of the horizontal propagation velocity in association with each other.

The invention recited in claim 15 is the wave propagation velocity measuring method according to any one of claims 1 to 14, wherein a plurality of acoustic elements integrally formed and disposed in a line or a matrix includes the transmitter and/or the receiver.

The invention recited in claim 16 is the wave propagation velocity measuring method according to any one of claims 1 to 14, wherein the propagation wavefront shape model has an elliptical shape in an acoustically anisotropic plane of the object.

The invention recited in claim 17 is a wave propagation velocity measuring apparatus comprising: a transmitter that is disposed on a first surface of an object having acoustic anisotropy and inputs an elastic wave to the first surface; a receiver that is disposed on the first surface or a second surface facing the first surface of the object and receives two or more of the elastic wave propagating at respective different angles within the object to output respective two or more pieces of reception information; a propagation velocity vector calculation section that calculates two or more propagation velocity vectors based on the respective two or more pieces of reception information; a propagation wavefront shape model determination section that determines a propagation wavefront shape model corresponding to the acoustic anisotropy of the object based on the two or more propagation velocity vectors; and a propagation velocity calculation section that calculates a horizontal propagation velocity parallel to the first surface based on the propagation wavefront shape model.

The invention recited in claim 18 is a program that causes a computer of a wave propagation velocity measuring apparatus including: a transmitter that is disposed on a first surface of an object having acoustic anisotropy and inputs an elastic wave to the first surface; and a receiver that is disposed on the first surface or a second surface facing the first surface of the object and receives two or more of the elastic wave propagating at respective different angles within the object to output respective two or more pieces of reception information to function as: a propagation velocity vector calculation section that calculates two or more propagation velocity vectors based on the respective two or more pieces of reception information; a propagation wavefront shape model determination section that determines a propagation wavefront shape model corresponding to the acoustic anisotropy of the object based on the two or more propagation velocity vectors; and a propagation velocity calculation section that calculates a horizontal propagation velocity parallel to the first surface based on the propagation wavefront shape model.

Advantageous Effects of Invention

According to the present invention, it is possible to more simply measure the propagation velocity of an elastic wave in a predetermined direction of an object having acoustic anisotropy.

Brief Description of Drawings

[FIG. 1] This is a block diagram illustrating a configuration of a wave propagation velocity measuring apparatus.
[FIG. 2] This is a schematic perspective view illustrating an arrangement of sensor elements of the wave propagation velocity measuring apparatus and an object.
[FIG. 3] This is a flowchart illustrating a horizontal propagation velocity calculation method according to a first embodiment.
[FIG. 4A] This is a conceptual perspective view illustrating acoustic anisotropy axes of an object according to the first embodiment.
[FIG. 4B] This is a conceptual side view illustrating the arrangement of the sensor elements of the wave propagation velocity measuring apparatus and the object.
[FIG. 5] This is a conceptual diagram of a propagation wavefront shape model of elastic waves in a plane exhibiting acoustic anisotropy.
[FIG. 6] This is a block diagram illustrating another configuration of the wave propagation velocity measuring apparatus.
[FIG. 7] This is a flowchart illustrating a horizontal propagation velocity calculation method according to a modification example of the first embodiment.
[FIG. 8] This is a flowchart illustrating a horizontal propagation velocity calculation method according to a second embodiment.
[FIG. 9A] This is a schematic perspective view illustrating an arrangement of sensor elements according to modification examples of the first to fourth embodiments and an object.
[FIG. 9B] This is a conceptual side view illustrating an arrangement of sensor elements according to modification examples of the first to fourth embodiments and an object.
[FIG. 10A] This is a schematic perspective view illustrating an arrangement of sensor elements according to a fifth embodiment and an object, with the arrangement direction of the sensor elements set in a first direction.
[FIG. 10B] This is a schematic perspective view illustrating the arrangement of the sensor elements according to the fifth embodiment and the object, with the arrangement direction of the sensor elements changed to a second direction.
[FIG. 11] This is a flowchart illustrating a horizontal propagation velocity calculation method according to the fifth embodiment.

[FIG. 12] This is a conceptual diagram of a propagation wavefront shape model of elastic waves in a plane exhibiting acoustic isotropy.

[FIG. 13] This is a flowchart illustrating a horizontal propagation velocity calculation method according to a sixth embodiment.

[FIG. 14] This is a flowchart illustrating a horizontal propagation velocity calculation method according to a modification example of the sixth embodiment.

[FIG. 15A] This is a conceptual perspective view of an object whose acoustic anisotropy axes are not parallel to a first surface.

[FIG. 15B] This is a conceptual side view of the object whose acoustic anisotropy axes are not parallel to the first surface.

[FIG. 16] This is a schematic perspective view illustrating an arrangement of sensor elements according to a modification example of the sixth embodiment and an object.

[FIG. 17A] This is an example of a velocity map indicating velocity data corresponding to positional arrangements of an array-type sensor.

[FIG. 17B] This is another example of the velocity map indicating velocity data corresponding to positional arrangements of an array-type sensor.

[FIG. 17C] This is an example of a velocity map indicating velocity data corresponding to arrangement directions of an array-type sensor.

Description of Embodiments

Hereinafter, a wave propagation velocity measuring apparatus that realizes a wave propagation velocity measuring method according to an embodiment of the present invention will be described in detail with reference to the drawings. However, the scope of the invention is not limited to the illustrated examples. Furthermore, in the following description, components having the same function and configuration are denoted by the same reference signs, and the description thereof is omitted, with the difference being mainly described.

[Overall Configuration of Wave Propagation Velocity Measuring Apparatus]

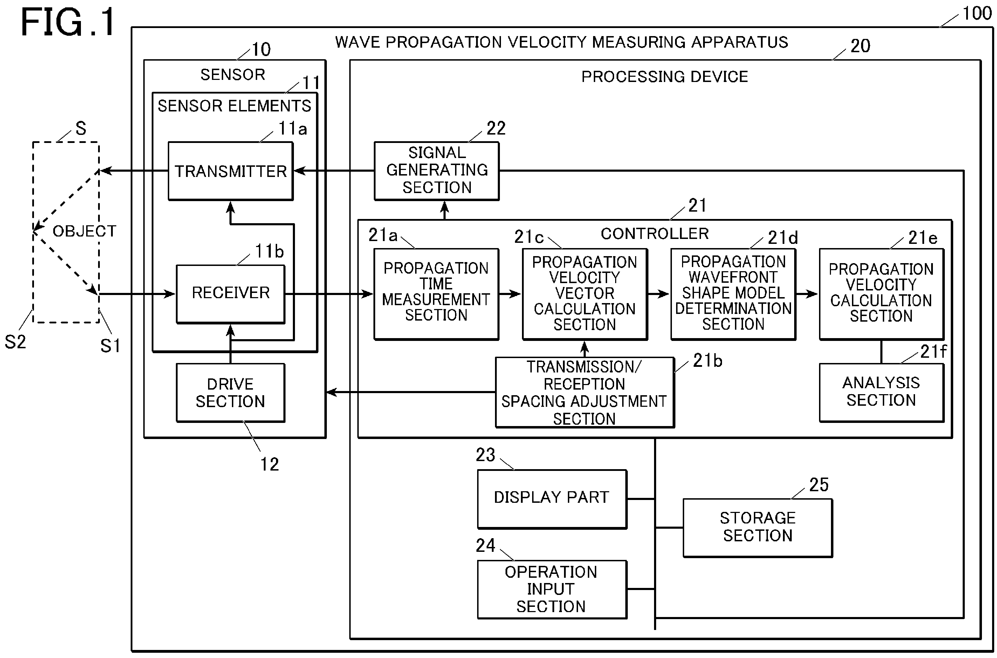

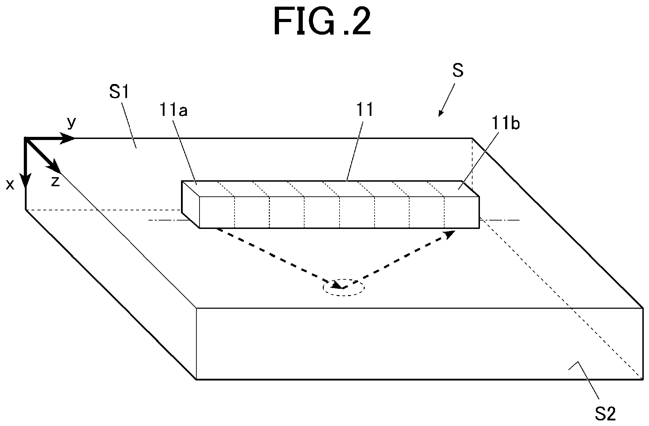

FIG. 1 is a block diagram illustrating a functional configuration of a wave propagation velocity measuring apparatus 100. The wave propagation velocity measuring apparatus 100 includes a sensor 10 and a processing device 20 and measures the propagation velocity of elastic waves in an object S. FIG. 2 is a perspective view illustrating an arrangement of sensor elements 11 constituting the sensor 10 that propagates elastic waves to the object S.

Elastic waves are waves that propagate within an elastic body and include, for example, sound waves and seismic waves. In the following, an example in which ultrasonic waves are used as the elastic waves will be described. In the following description, the x-direction, the y-direction, and the z-direction represent the directions illustrated in FIG. 2. In the following description, the object S is a substance having acoustic anisotropy.

Acoustic anisotropy is a property that the propagation velocity of elastic waves varies depending on the propagation direction. Examples of the substance that potentially exhibits acoustic anisotropy include a metal such as titanium (Ti) or a metal alloy containing Ti that incorporates crystalline structures or is stretched in a specific direction, as well as a composite material in which various fillers are blended with a resin substrate, such as carbon fiber reinforced plastics (CFRP), carbon fiber reinforced thermoplastics (CFRTP), or glass fiber reinforced plastics (GFRP).

Further, in FIG. 2, the object S having a flat plate shape is illustrated as an example, but the present invention is not limited thereto. However, the object S preferably has a first surface S1 (yz plane) and a second surface S2 facing the first surface S1 that are substantially parallel to each other. For example, the object S may have a cylindrical shape.

(Sensor)

The sensor 10 transmits and receives ultrasonic waves while in contact with the first surface S1 of the object S. The sensor 10 includes the sensor elements 11 and a drive section 12.

{Sensor Elements}

The sensor elements 11 constitute, for example, as illustrated in FIG. 2, an array-type sensor formed of a plurality of piezoelectric elements arranged in a one-dimensional array in a predetermined direction. A transmitter 11a is selected from the sensor elements 11 and transmits ultrasonic waves by vibrating in accordance with signals output from a signal generating section 22 (described later) of the processing device 20. In addition, a receiver 11b is selected from the sensor elements 11, generates reception signals by receiving the ultrasonic waves transmitted by the transmitter 11a and converting the ultrasonic waves into electrical signals, and inputs the reception signals to the processing device 20.

{Drive Section}

The drive section 12 changes the positional arrangement and the arrangement direction of the sensor elements 11. To be specific, the drive section 12 includes a two-dimensional movement mechanism that moves the sensor elements 11 to an arbitrary position on the first surface S1 of the object S and a rotation mechanism that rotates the sensor elements 11 in an arbitrary direction on the first surface S1.

(Processing Device)

The processing device 20 is connected to the sensor 10 and controls the sensor 10. The sensor 10 and the processing device 20 may be connected to each other in a wired manner by, for example, a cable and a connector, or may be connected to each other in a wireless manner by wireless communication. The processing device 20 includes a controller 21, a signal generating section 22, a display part 23, an operation input section 24, and a storage section 25.

{Controller}

The controller 21 includes a central processing unit (CPU), a random-access memory (RAM), and a read-only memory (ROM). The controller 21 controls the entire operation of the wave propagation velocity measuring apparatus 100.
The CPU controls the components of the wave propagation velocity measuring apparatus 100. The RAM is a volatile memory that temporarily stores various kinds of information in a writable and readable manner. The ROM is a non-volatile memory in which various types of information and programs are stored in a readable manner. More specifically, the controller 21 reads a designated program from various programs stored in the ROM and develops the program in the RAM by the CPU. Then, the controller 21 executes various kinds of processing in cooperation with the program.
For example, the controller 21 functions as a propagation time measurement section 21a that measures, as reception information, a propagation time, which is a time from when the transmitter 11a transmits an ultrasonic wave to when the receiver 11b receives that ultrasonic wave. Furthermore, the controller 21 functions as a transmission/reception spacing adjustment section 21b that selects the transmitter 11a and the receiver 11b from the sensor elements 11 by supplying a signal to the sensor 10, thereby adjusting an arrangement spacing between the transmitter 11a and the receiver 11b. The controller 21 also functions as a propagation velocity vector calculation section 21c that calculates propagation velocity vectors based on the propagation times of ultrasonic waves, the arrangement spacing between the transmitter 11a and the receiver 11b, and thickness information of the object S. Furthermore, the controller 21 functions as a propagation wavefront shape model determination section 21d that determines a propagation wavefront shape model of ultrasonic waves in the object S based on the calculated propagation velocity vectors. Furthermore, the controller 21 functions as a propagation velocity calculation section 21e that calculates the propagation velocity of ultrasonic waves in a predetermined direction of the object S based on the propagation wavefront shape model. In addition, the controller 21 functions as an analysis section 21f that analyzes the propagation velocity of ultrasonic waves corresponding to the positional arrangements and/or the arrangement directions of the transmitter 11a and the receiver 11b.

{Signal Generating Section}

The signal generating section 22 transmits ultrasonic waves from the transmitter 11a to the object S by inputting transmission signals, which are electrical signals, to the transmitter 11a of the sensor 10 according to the control of the controller 21.

{Display Part}

The display part 23 displays various kinds of information in the propagation velocity calculation processing to be described later. In particular, the display part 23 displays a velocity map described later. The display part 23 includes a display panel such as a liquid crystal display (LCD) or an organic electroluminescent (EL) display, for example.

{Operation Input Section}

The operation input section 24 is operated by a user who uses the processing device 20. In response to the operation, the operation input section 24 inputs various kinds of information and instructions to the processing device 20. The operation input section 24 includes, for example, a mouse, a keyboard, a pushbutton, and the like.

{Storage Section}

The storage section 25 includes a hard disk drive (HDD) or a solid-state drive (SSD) and stores various types of information in a readable and writable manner.

[First Embodiment]

[Unidirectional Horizontal Propagation Velocity Calculation Processing; Arrangement Spacing Change → Acquisition of Two Vectors (Thickness Known)]

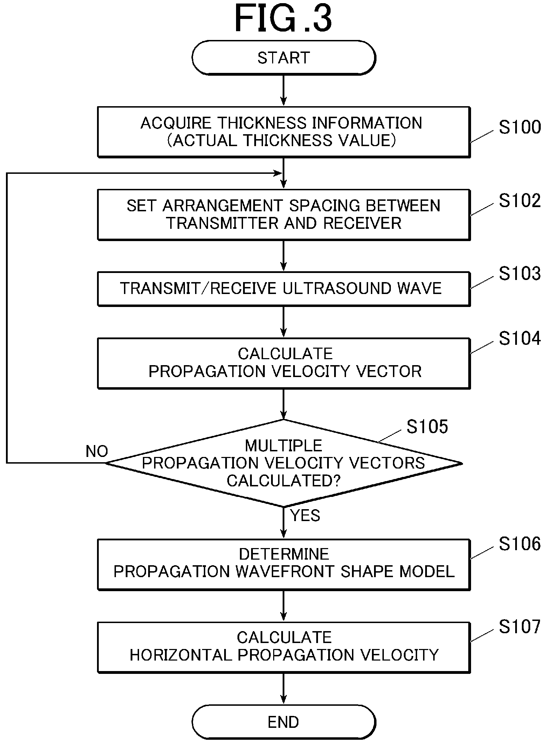

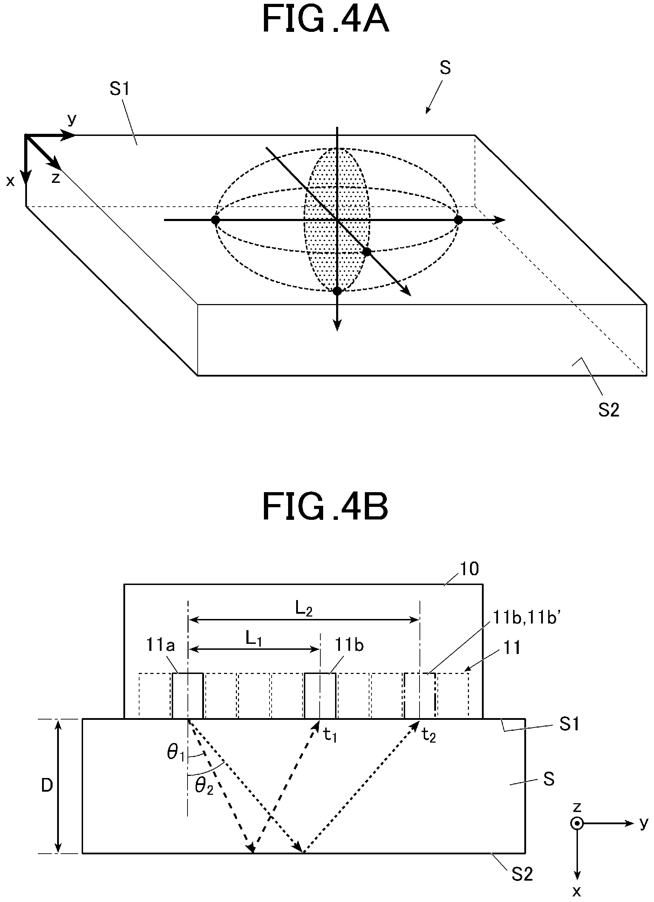

Next, propagation velocity calculation processing according to the first embodiment performed by the wave propagation velocity measuring apparatus 100 will be described with reference to FIGS. 3 to 5. Note that in the following, as illustrated in FIG. 4A, the propagation velocity calculation processing will be described in a case where the object S is a substance having uniaxial acoustic anisotropy, more specifically, in a case where two acoustic anisotropy axes are parallel to the first surface S1 (yz plane) and one of the axes is in the y-direction.

The controller 21 that has received an operation input by the user via the operation input section 24 acquires the thickness information D related to the thickness value of the object S (step S100). In the present embodiment, the controller 21 acquires, as the thickness information D, an actual thickness value, which is a measured value, from data stored in advance in the storage section 25 or from an operation input by the user via the operation input section 24.

After the acquisition of the thickness information D, the controller 21, which serves as the transmission/reception spacing adjustment section 21b, sets the arrangement spacing $L_1$ between the transmitter 11a and the receiver 11b in the y-direction (step S102). To be specific, the controller 21 sets the arrangement spacing $L_1$ by selecting the sensor elements 11 that function as the transmitter 11a and the receiver 11b.

After setting the arrangement spacing $L_1$, the controller 21 transmits an ultrasonic wave from the transmitter 11a by inputting a signal from the signal generating section 22 to the transmitter 11a, receives the ultrasonic wave in the receiver 11b, and outputs a reception signal (step S103). Next, the controller 21, which serves as the propagation velocity vector calculation section 21c, calculates the propagation velocity vector of the ultrasonic wave (step S104).

Here, $t_1$ is defined as an oblique propagation time from when an ultrasonic wave is transmitted from the transmitter 11a on the first surface S1 of the object S and reflected by the second surface S2, to when that ultrasonic wave is received by the receiver 11b separated from the transmitter 11a by $L_1$ on the first surface S1. The controller 21 calculates the magnitude $Vc_1$ of a first propagation velocity vector from FIG. 4B using the following Expression (1).
[Expression 1]

$$Vc_1 = \frac{2\sqrt{\left(\frac{L_1}{2}\right)^2 + D^2}}{t_1} \quad \cdots (1)$$

In addition, the controller 21 calculates an input angle of the ultrasonic wave transmitted from the transmitter 11a and input to the first surface S1, that is, an angle $\theta_1$ formed by the first propagation velocity vector with respect to the y-axis from FIG. 4B using the following Expression (2).
[Expression 2]

$$\theta_1 = \tan^{-1}\left(\frac{\frac{L_1}{2}}{D}\right) \quad \cdots (2)$$

The controller 21 determines whether a plurality of propagation velocity vectors have been calculated (step S105). If a plurality of propagation velocity vectors have not been calculated (step S105; No), the controller 21 advances the processing to step S102 and changes the arrangement spacing to $L_2$ different from $L_1$. In this step, $t_2$ is defined as an oblique propagation time from when an ultrasonic wave is transmitted from the transmitter 11a to when that ultrasonic wave is received by the receiver 11b (11b') separated from the transmitter 11a by $L_2$. The controller 21 calculates the magnitude $Vc_2$ of a second propagation velocity vector of the ultrasonic wave that enters the first surface S1 at an angle different from the first propagation velocity vector and propagates through the object S using the following Expression (3), similar to Expression (1).
[Expression 3]

$$Vc_2 = \frac{2\sqrt{\left(\frac{L_2}{2}\right)^2 + D^2}}{t_2} \quad \cdots(3)$$

In addition, the angle $\theta_2$ formed by the second propagation velocity vector with respect to the y-axis is calculated by the following Expression (4), similarly to Expression (2).
[Expression 4]

$$\theta_2 = \tan^{-1}\left(\frac{\frac{L_2}{2}}{D}\right) \quad \cdots(4)$$

If a plurality of propagation velocity vectors has been calculated (step S105; Yes), the controller 21, which serves as the propagation wavefront shape model determination section 21d, determines a propagation wavefront shape model of the ultrasonic waves propagating through the object S from the plurality of propagation velocity vectors (step S106). The controller 21, which serves as the propagation velocity calculation section 21e, calculates the horizontal propagation velocity (propagation velocity in the y-direction) Vb from the propagation wavefront shape model (step S107).

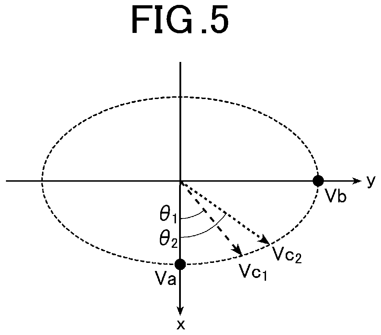

As described above, the object S is an acoustically anisotropic substance whose one axis of anisotropy is in the y-direction. As illustrated in FIG. 5, the wavefront of the ultrasonic wave propagating in the xy plane of the object S exhibits an elliptical shape or a shape similar to an elliptical shape. Therefore, the plurality of propagation velocity vectors calculated in step S102 to step S105 can be mapped onto the same propagation wavefront shape model expressed as an ellipse, as illustrated in FIG. 5, where Va is defined as the vertical propagation velocity (propagation velocity in the x-direction) and Vb is defined as the horizontal propagation velocity in the object S. That is, based on the first and second propagation velocity vectors, propagation wavefront shape models expressed by the following Expressions (5) and (6) hold simultaneously.
[Expression 5]

$$\left(\frac{Vc_1 \cos\theta_1}{Va}\right)^2 + \left(\frac{Vc_1 \sin\theta_1}{Vb}\right)^2 = 1 \quad \cdots(5)$$

[Expression 6]

$$\left(\frac{Vc_2 \cos\theta_2}{Va}\right)^2 + \left(\frac{Vc_2 \sin\theta_2}{Vb}\right)^2 = 1 \quad \cdots(6)$$

Among the variables included in Expressions (1) to (4), the arrangement spacings $L_1$ and $L_2$, the thickness information D, the oblique propagation times $t_1$ and $t_2$ are all values obtained by actual measurement. Therefore, when Expressions (1) and (2) are substituted into Expression (5) and Expressions (3) and (4) are substituted into Expression (6), only two unknown values among the variables included in Expressions (5) and (6) are the vertical propagation velocity Va and the horizontal propagation velocity Vb. Therefore, by solving Expressions (5) and (6) as simultaneous equations, the horizontal propagation velocity Vb and the vertical propagation velocity Va can be calculated.

[Effects of First Embodiment]

As described above, in the propagation velocity calculation processing according to the first embodiment, elastic waves are transmitted to the first surface S1 of the acoustically anisotropic object S by the transmitter 11a disposed on the first surface S1 of the object S, and a plurality of pieces of reception information are acquired by receiving a plurality of elastic waves propagating at different angles within the object S by the receiver 11b disposed on the first surface S1 of the object S. Next, a plurality of propagation velocity vectors are calculated based on the plurality of pieces of received information, a propagation wavefront shape model corresponding to the acoustic anisotropy of the object S is determined based on the plurality of propagation velocity vectors, and the horizontal propagation velocity Vb parallel to the first surface S1 is calculated based on the propagation wavefront shape model. According to this configuration, the horizontal propagation velocity Vb in the y-direction can be calculated without having to propagate ultrasonic waves in the y-direction by disposing the transmitter 11a and the receiver 11b opposite each other on both end faces of the object S parallel to the zx plane. That is, the wave propagation velocity measuring method according to the present embodiment makes it possible to more simply measure the propagation velocity of elastic waves in a predetermined direction, even for an elongated object S for which it is physically difficult to dispose a sensor on the end face.

[Modification Example 1 of First Embodiment] (Storage of Propagation Wavefront Shape Model Candidate)

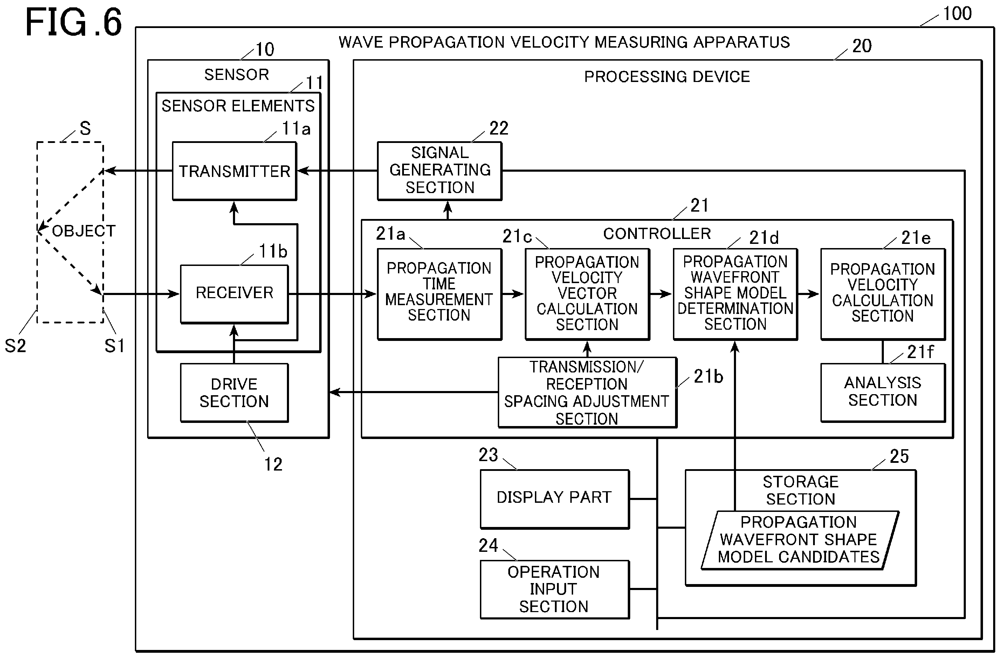

In the above-described configuration, the propagation wavefront shape model is arithmetically determined by substituting the plurality of propagation velocity vectors into Expressions (5) and (6), but the present invention is not limited thereto. That is, as illustrated in FIG. 6, a plurality of candidates for a propagation wavefront shape model (hereinafter, referred to as propagation wavefront shape model candidates) corresponding to the object S are calculated in advance and stored in the storage section 25. Then, an optimal propagation wavefront shape model may be selected based on the plurality of propagation velocity vectors expressed by Expressions (1) and (2) or Expressions (3) and (4). Accordingly, it is possible to save time and cost for sequentially calculating the propagation wavefront shape model from the propagation velocity vectors, thereby more efficiently calculating the horizontal propagation velocity Vb.

[Modification Example 2 of First Embodiment] (Simultaneous Acquisition of a Plurality of Propagation Velocity Vectors)

In the embodiment described above, after the setting of the arrangement spacing by the transmission/reception spacing adjustment section 21b, transmission and reception of ultrasonic waves by the transmitter 11a and the receiver 11b are performed, and this is repeated a plurality of times to calculate a plurality of propagation velocity vectors. However, the present invention is not limited thereto. That is, as illustrated in FIG. 2, when the transmitter 11a and the receiver 11b are selected from the plurality of sensor elements 11, a plurality of propagation velocity vectors may be calculated by simultaneously selecting a plurality of sensor elements 11 as the receiver 11b and acquiring a plurality of reception signals in one transmission and reception of ultrasonic waves. Conversely, a plurality of propagation velocity vectors may be calculated by simultaneously selecting a plurality of sensor elements 11 as the transmitter 11a, simultaneously transmitting a plurality of ultrasonic waves, and receiving the ultrasonic waves by a single receiver 11b to acquire a plurality of reception signals. Accordingly, it is possible to save time and effort for setting the arrangement spacing a plurality of times and transmitting and receiving an ultrasonic wave a plurality of times, thereby calculating the horizontal propagation velocity Vb more efficiently.

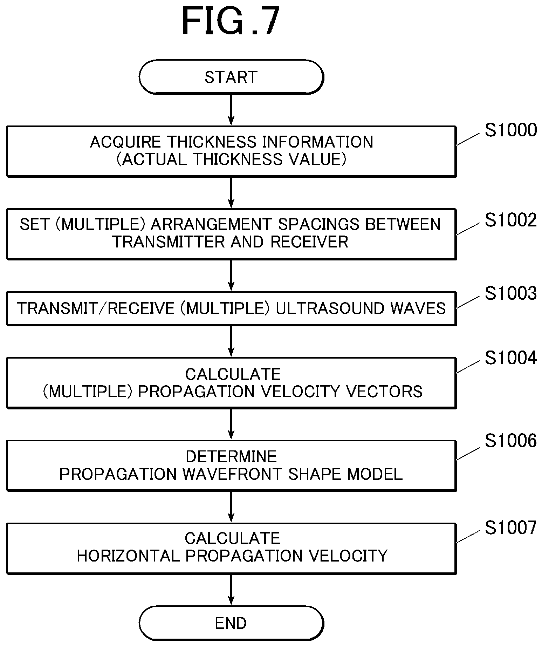

The propagation velocity calculation processing according to the present embodiment will be described with reference to the flowchart in FIG. 7. In the following description, the same contents as those in FIG. 3 will not be described in detail, and different points will be mainly described.

The controller 21 acquires the thickness information D on the thickness value of the object S (step S1000). The controller 21, which serves as the transmission/reception spacing adjustment section 21b, sets a plurality of arrangement spacings $L_1$ and $L_2$ as the arrangement spacing L between the transmitter 11a and the receiver 11b in the y-direction (step S1002). The controller 21 transmits an ultrasonic wave from the transmitter 11a, receives the ultrasonic wave by the receiver 11b separated from the transmitter 11a by $L_1$ and by the receiver 11b (11b') separated from the transmitter 11a by $L_2$, and outputs a plurality of reception signals (step S1003). Then, the controller 21, which serves as the propagation velocity vector calculation section 21c, calculates a plurality of propagation velocity vectors based on the plurality of reception signals (step S1004). The controller 21, which serves as the propagation wavefront shape model determination section 21d, determines a propagation wavefront shape model of the ultrasonic waves propagating through the object S from the plurality of propagation velocity vectors (step S1006). The controller 21, which serves as the propagation velocity calculation section 21e, calculates the horizontal propagation velocity Vb from the propagation wavefront shape model (step S1007).

[Modification Example 3 of First Embodiment] (Use of Vertical Propagation Velocity)

Although the propagation velocity vectors of the ultrasonic waves obliquely propagating within the object S are used as the plurality of propagation velocity vectors in the embodiment described above, the present invention is not limited thereto. That is, one of the plurality of propagation velocity vectors may be the vertical propagation velocity Va (input angle $\theta = 0°$).

To be specific, the controller 21 transmits an ultrasonic wave from the transmitter 11a, receives the ultrasonic wave by the receiver 11b disposed at the same position as the transmitter 11a and by the receiver 11b at a position separated from the transmitter 11a by L, and measures a vertical propagation time ta and the oblique propagation time tc. Then, by acquiring the thickness information D, the controller 21 calculates the magnitude Vc and the input angle $\theta$ of the propagation velocity vector using the following Expressions (7) and (8) based on Expressions (1) and (2).
[Expression 7]

$$Vc = \frac{2\sqrt{\left(\frac{L}{2}\right)^2 + D^2}}{tc} \quad \cdots(7)$$

[Expression 8]

$$\theta = \tan^{-1}\left(\frac{\frac{L}{2}}{D}\right) \quad \cdots(8)$$

The vertical propagation velocity Va is calculated by the following Expression (9) using the thickness information D and the vertical propagation time ta.

[Expression 9]

$$Va = \frac{2D}{ta} \quad \cdots(9)$$

As described above, the propagation velocity vector, the vertical propagation velocity Va, and the horizontal propagation velocity Vb can be mapped onto a single propagation wavefront shape model. Therefore, the following Expression (10) holds.

[Expression 10]

$$\left(\frac{Vc \cos\theta}{Va}\right)^2 + \left(\frac{Vc \sin\theta}{Vb}\right)^2 = 1 \quad \cdots(10)$$

Among the variables included in Expressions (7) to (9), the arrangement spacing L, the thickness information D, the vertical propagation time ta, and the oblique propagation time tc are all values obtained by actual measurement. Therefore, when Expressions (7) to (9) are substituted into Expression (10), the only unknown value among the variables included in Expressions (10) is the horizontal propagation velocity Vb, which can be calculated by solving Expression (10).

[Second Embodiment]

[Unidirectional Horizontal Propagation Velocity Calculation Processing; Arrangement Spacing Change → Acquisition of Three Vectors (Thickness Unknown)]

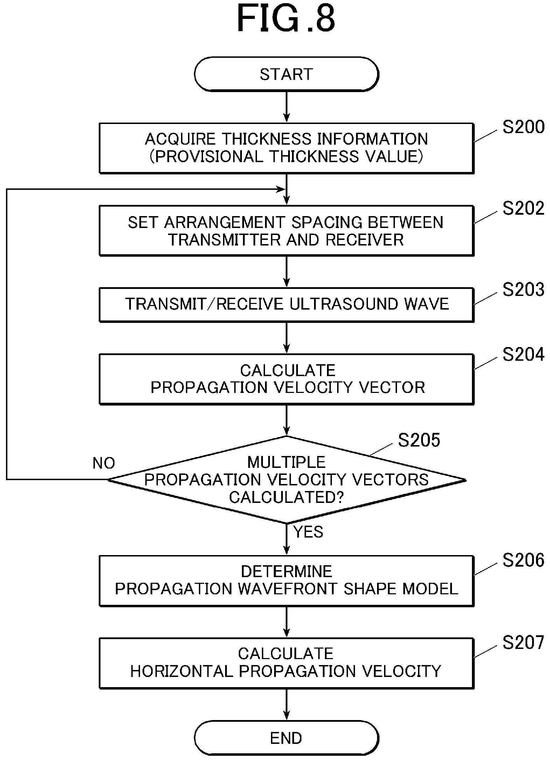

Next, propagation velocity calculation processing according to a second embodiment will be described with reference to the flowchart in FIG. 8. Although the thickness information D is a measured value in the first embodiment, the thickness information D is an unknown value in the second embodiment. In the following description, the same contents as those in FIG. 3 will not be described in detail, and different points will be mainly described.

The controller 21 that has received an operation input by the user via the operation input section 24 acquires the thickness information D of the object S by setting a provisional thickness value (step S200).

Step S202 to step S206 are substantially the same as step S102 to step S106 of FIG. 3, and therefore, description thereof is omitted. After calculating the plurality of propagation velocity vectors and determining the propagation wavefront shape model, the controller 21, which serves as the propagation velocity calculation section 21e, calculates the horizontal propagation velocity Vb (step S207).

In the present embodiment, the thickness information D is an unknown value. Therefore, even when Expressions (1) and (2) and the values of $L_1$ and $t_1$ are substituted into Expression (5), and Expressions (3) and (4) and the values of $L_2$ and $t_2$ are substituted into Expression (6), the unknown values among the variables included in Expressions (5) and (6) are three values of Va, Vb, and D. Thus, the horizontal propagation velocity Vb cannot be calculated even when Expressions (5) and (6) are simultaneously solved.

In the present embodiment, furthermore, the vertical propagation time ta until the receiver 11b disposed at the same position as the transmitter 11a receives the ultrasonic wave is acquired, and the vertical propagation velocity Va is calculated by Expression (9).

Then, by further substituting Expression (9) into Expressions (5) and (6), the unknown values among the variables included in Expressions (5) and (6) are the horizontal propagation velocity Vb and the thickness information D. Therefore, similarly to the case where the thickness information D is known, the horizontal propagation velocity Vb can be calculated by solving Expressions (5) and (6) as simultaneous equations.

Note that the vertical propagation velocity Va is used as a new third propagation velocity vector in the above example, but the present invention is not limited thereto. As the new third propagation velocity vector, a propagation velocity vector of an ultrasonic wave having a predetermined input angle may be acquired, similarly to the first and second propagation velocity vectors.

[Effects of Second Embodiment]

As described above, according to the propagation velocity calculation processing according to the second embodiment, even when the thickness of the object S is unknown, the propagation velocity of the elastic wave in the predetermined direction of the object S can be measured.

[Third Embodiment]

[Unidirectional Horizontal Propagation Velocity Calculation Processing; Arrangement Spacing Change → Acquisition of Two Vectors (Provisional Thickness Value Change)]

Next, propagation velocity calculation processing according to a third embodiment will be described. In the first and second embodiments, the same number of propagation velocity vectors as the number of unknown variables are acquired by receiving a plurality of ultrasonic waves at different arrangement spacings. That is, when the thickness information D of the object S is known, two propagation velocity vectors are acquired, and when the thickness information D is unknown, one propagation velocity vector is further acquired, thereby deriving the horizontal propagation velocity Vb. However, even when the thickness information D is unknown, the horizontal propagation velocity Vb can be calculated from only two propagation velocity vectors, assuming that the propagation wavefront shape model has an elliptical shape.

Specifically, the controller 21 measures the vertical propagation time ta and the oblique propagation time tc. Then, by setting a predetermined provisional thickness value $D_p$ as the thickness information, the controller 21 calculates the magnitude $Vc_p$, the input angle $\theta_p$, and the vertical propagation velocity $Va_p$ of the propagation velocity vector corresponding to $D_p$ using the following Expressions (11) to (13) based on Expressions (1), (2), and (9).

[Expression 11]

$$Vc_p = \frac{2\sqrt{\left(\frac{L}{2}\right)^2 + D_p{}^2}}{tc} \quad \cdots (11)$$

[Expression 12]

$$\theta_p = \tan^{-1}\left(\frac{\frac{L}{2}}{D_p}\right) \quad \cdots (12)$$

[Expression 13]

$$Va_p = \frac{2D_p}{ta} \quad \cdots (13)$$

Next, by setting a predetermined provisional thickness value $D_q$ different from $D_p$ as the thickness information, the controller 21 calculates the magnitude $Vc_q$, the input angle $\theta_q$, and the vertical propagation velocity $Va_q$ of the propagation velocity vector corresponding to $D_q$ using the following Expressions (14) to (16) based on Expressions (3), (4), and (9).

[Expression 14]

$$Vc_q = \frac{2\sqrt{\left(\frac{L}{2}\right)^2 + D_q{}^2}}{tc} \qquad \cdots(14)$$

[Expression 15]

$$\theta_q = \tan^{-1}\left(\frac{\frac{L}{2}}{D_q}\right) \qquad \cdots(15)$$

[Expression 16]

$$Va_q = \frac{2D_q}{ta} \qquad \cdots(16)$$

As described above, the propagation velocity vector ($Vc_p$, $\theta_p$), the vertical propagation velocity $Va_p$, and the horizontal propagation velocity $Vb$ corresponding to $D_p$ can be mapped on a first propagation wavefront shape model. On the other hand, the propagation velocity vector ($Vc_q$, $\theta_q$), the vertical propagation velocity $Va_q$, and the horizontal propagation velocity $Vb$ corresponding to $D_q$ can be mapped on a second propagation wavefront shape model. Therefore, the following Expressions (17) and (18) hold simultaneously.
[Expression 17]

$$\left(\frac{Vc_p \cos\theta_p}{Va_p}\right)^2 + \left(\frac{Vc_p \sin\theta_p}{Vb}\right)^2 = 1 \qquad \cdots(17)$$

[Expression 18]

$$\left(\frac{Vc_q \cos\theta_q}{Va_q}\right)^2 + \left(\frac{Vc_q \sin\theta_q}{Vb}\right)^2 = 1 \qquad \cdots(18)$$

Here, among the variables included in Expressions (17) and (18), the only unknown value is the horizontal propagation velocity $Vb$. Therefore, the horizontal propagation velocity $Vb$ can be calculated by obtaining the value of $Vb$ that satisfies Expressions (17) and (18) at the same time.

[Effects of Third Embodiment]

As described above, according to the propagation velocity calculation processing according to the third embodiment, even when the thickness of the object S is unknown, the horizontal propagation velocity can be measured more simply.

[Fourth Embodiment]

[Unidirectional Horizontal Propagation Velocity Calculation; Thickness Value Change → Acquisition of Two Vectors (Thickness Known)]

Next, propagation velocity calculation processing according to a fourth embodiment will be described. In the first to third embodiments, a plurality of ultrasonic waves is received at different arrangement spacings. In contrast, in the fourth embodiment, the horizontal propagation velocity $Vb$ is calculated by a configuration in which a plurality of ultrasonic waves is transmitted and received while the thickness value of the object S is changed with the arrangement spacing L between the transmitter 11a and the receiver 11b fixed.
To be specific, the controller 21 sets the thickness information of the object to a predetermined value $D_3$, transmits an ultrasonic wave from the transmitter 11a, and receives the ultrasonic wave by the receiver 11b disposed at a position separated from the transmitter 11a by L, thereby measuring an oblique propagation time $t_3$. Then, the controller 21 calculates the magnitude $Vc_3$ and the input angle $\theta_3$ of a first propagation velocity vector using the following Expressions (19) and (20) based on Expressions (1) and (2).

[Expression 19]

$$Vc_3 = \frac{2\sqrt{\left(\frac{L}{2}\right)^2 + D_3{}^2}}{t_3} \quad \cdots (19)$$

[Expression 20]

$$\theta_3 = \tan^{-1}\left(\frac{\frac{L}{2}}{D_3}\right) \quad \cdots (20)$$

Next, the controller 21 sets the thickness information to a predetermined value $D_4$ different from $D_3$, transmits an ultrasonic wave from the transmitter 11a, and receives the ultrasonic wave by the receiver 11b, thereby measuring an oblique propagation time $t_4$. Then, the controller 21 calculates the magnitude $Vc_4$ and the input angle $\theta_4$ of a second propagation velocity vector using the following Expressions (21) and (22) based on Expressions (3) and (4).

[Expression 21]

$$Vc_4 = \frac{2\sqrt{\left(\frac{L}{2}\right)^2 + D_4{}^2}}{t_4} \quad \cdots (21)$$

[Expression 22]

$$\theta_4 = \tan^{-1}\left(\frac{\frac{L}{2}}{D_4}\right) \quad \cdots (22)$$

As described above, the first and second propagation velocity vectors can be mapped onto the same propagation wavefront shape model together with the vertical propagation velocity Va and the horizontal propagation velocity Vb. Therefore, the following Expressions (23) and (24) hold simultaneously.

[Expression 23]

$$\left(\frac{Vc_3 \cos\theta_3}{Va}\right)^2 + \left(\frac{Vc_3 \sin\theta_3}{Vb}\right)^2 = 1 \quad \cdots (23)$$

[Expression 24]

$$\left(\frac{Vc_4 \cos\theta_4}{Va}\right)^2 + \left(\frac{Vc_4 \sin\theta_4}{Vb}\right)^2 = 1 \quad \cdots (24)$$

Here, the two unknown values among the variables included in Expressions (23) and (24) are the vertical propagation velocity Va and the horizontal propagation velocity Vb. Therefore, by solving Expressions (23) and (24) as simultaneous equations, the horizontal propagation velocity Vb and the vertical propagation velocity Va can be calculated.

The conditions under which the thickness information of the object S can be changed as described above include a case where the object S is a deformable object such as a liquid, and a case where samples of different thicknesses can be prepared even when the object S is a solid object such as metal.

[Effects of Fourth Embodiment]

As described above, according to the propagation velocity calculation processing according to the fourth embodiment, the horizontal propagation velocity of the object S can be measured without changing the distance between transmission and reception of ultrasonic waves.

[Other Modification Examples of First Embodiment to Fourth Embodiment]

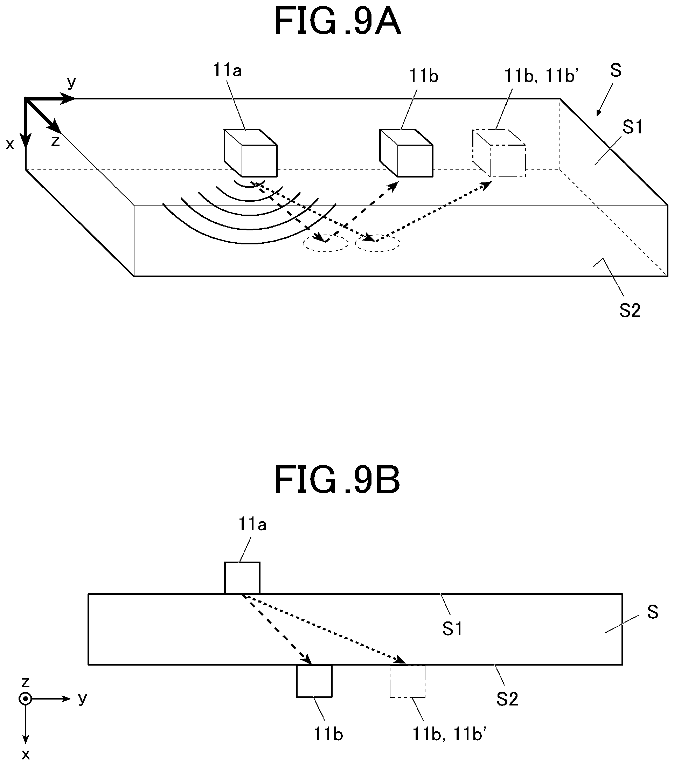

In FIG. 2 and FIG. 4B, the case where the sensor 10 includes an array-type sensor formed of a plurality of sensor elements 11 arranged in a one-dimensional array and the transmitter 11a and the receiver 11b are selected from the plurality of sensor elements 11 has been illustrated as an example. However, the present invention is not limited thereto.
For example, as illustrated in FIG. 9A, the sensor 10 may include a plurality of independent sensor elements 11, with a first sensor element 11 as the transmitter 11a and a second sensor element 11 as the receiver 11b. In the above-described configuration, the controller 21 moves the sensor elements 11 corresponding to one or both of the transmitter 11a and the receiver 11b by the two-dimensional movement mechanism of the drive section 12, thereby setting the arrangement spacing and/or the arrangement direction of the transmitter 11a and the receiver 11b.
Further, in FIG. 9A, the configuration has been adopted in which an ultrasonic wave is transmitted from the transmitter 11a disposed on the first surface S1 and the ultrasonic wave reflected by the second surface S2 is received by the receiver 11b. However, the present invention is not limited thereto. That is, as illustrated in FIG. 9B, the receiver 11b may be disposed on the second surface S2 to receive the ultrasonic wave transmitted through the object S.

[Fifth Embodiment]

[Multidirectional Horizontal Propagation Velocity Calculation Processing; Axis Directions Known (Thickness Unknown and Known)]

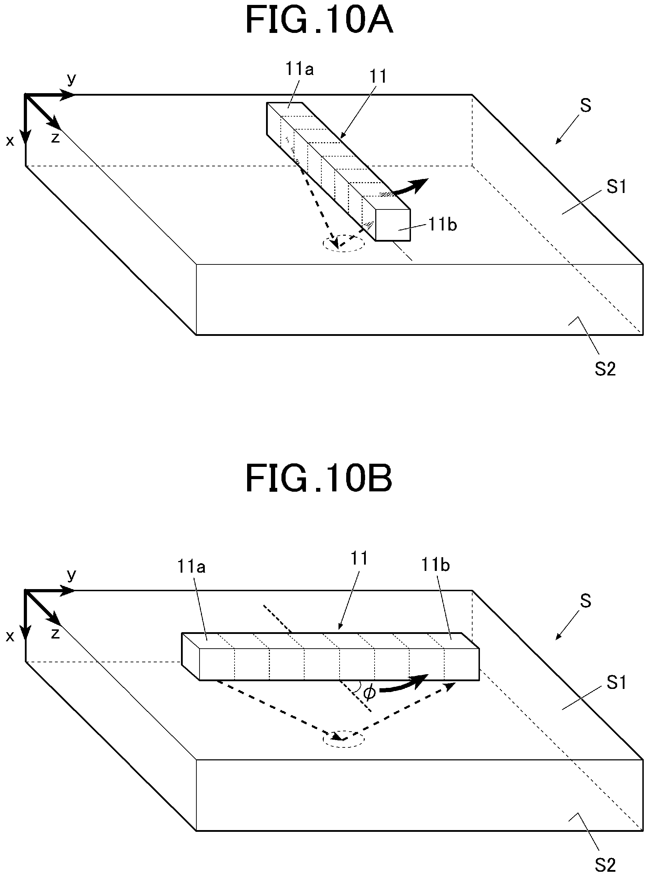

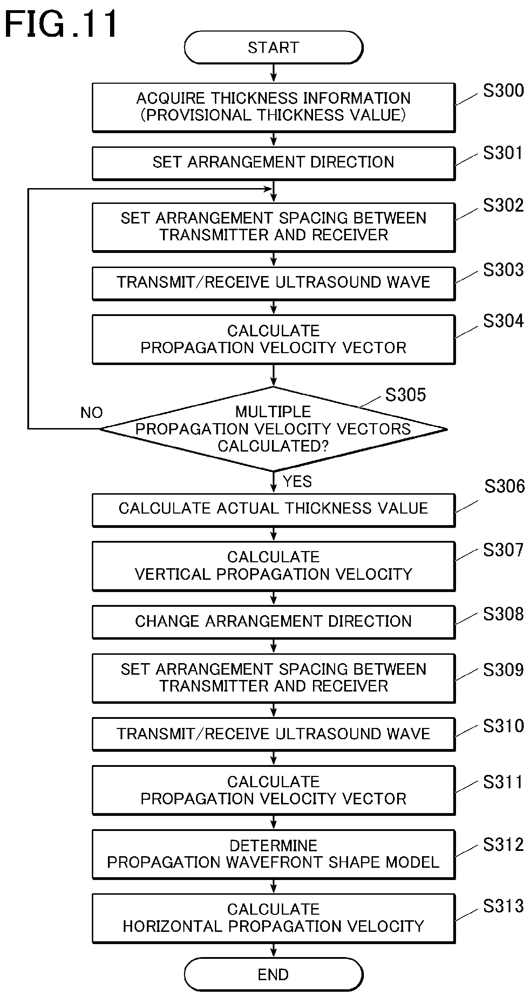

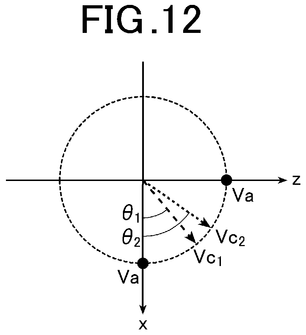

Next, propagation velocity calculation processing according to a fifth embodiment will be described. In the first to fourth embodiments, for a uniaxial acoustically anisotropic substance whose two acoustic anisotropy axes are parallel to the first surface S1, the transmitter 11a and the receiver 11b are disposed in that uniaxial direction on the first surface S1 of the object S, and the horizontal propagation velocity $Vb$ in that direction is calculated based on the acquired propagation velocity vector. In the fifth embodiment, similarly, it is assumed that the object S has uniaxial acoustic anisotropy, the two acoustic anisotropy axes are parallel to the first surface S1, and the axis directions are known. Next, as illustrated in FIG. 10A and FIG. 10B, the horizontal propagation velocity $Vb$ is calculated while the arrangement direction $\Phi$ of the transmitter 11a and the receiver 11b (sensor elements 11) is changed on the first surface S1 of the object S.
The propagation velocity calculation processing according to the fifth embodiment will be described with reference to the flowchart in FIG. 11. In the present embodiment, it is assumed that the thickness of the object S is unknown. In the following description, the same contents as those in FIG. 8 will not be described in detail, and different points will be mainly described.
The controller 21 acquires a provisional thickness value as the thickness information D of the object S (step S300). The controller 21 controls the drive section 12 to set the arrangement direction $\Phi$ of the sensor elements 11 (step S301). To be specific, as illustrated in FIG. 10A, the controller 21 sets the arrangement direction $\Phi$ of the sensor elements 11 to an in-plane direction (z-direction) in which the object S exhibits acoustic isotropy.
Subsequent step S302 to step S305 are substantially the same as step S202 to step S205 of FIG. 8, and thus detailed description thereof will be omitted. That is, by receiving a plurality of ultrasonic waves in one direction for different arrangement spacings $L_1$ and $L_2$, the controller 21 calculates the magnitudes $Vc_1$ and $Vc_2$ of a plurality of propagation velocity vectors in a cross section including that direction using Expressions (1) and (3).
After calculating the plurality of propagation velocity vectors (step S305; Yes), the controller 21 calculates the actual thickness value of the object S (step S306). In a plane in which the object S exhibits acoustic isotropy, the wavefront shape of the ultrasonic waves propagating through the object S is a perfectly circular shape as illustrated in FIG. 12. Therefore, the magnitudes $Vc_1$ and $Vc_2$ of the plurality of propagation velocity vectors calculated with the sensor elements 11 disposed in that in-plane direction are all equal.
Therefore, the thickness information D of the object S can be expressed by the following Expression (25) based on Expressions (1) and (3). The actual thickness value D can be calculated by substituting the arrangement spacings $L_1$ and $L_2$ set in the isotropic in-plane direction of the object S, and the oblique propagation times $t_1$ and $t_2$, which are measured values, into Expression (25).
[Expression 25]

$$D = \sqrt{\frac{t_2{}^2 \left(\frac{L_1}{2}\right)^2 - t_1{}^2 \left(\frac{L_2}{2}\right)^2}{t_1{}^2 - t_2{}^2}} \quad \cdots (25)$$

Then, the controller 21 calculates the vertical propagation velocity Va by actually measuring the vertical propagation time ta and substituting the measured vertical propagation time ta and the actual thickness value D calculated in step S306 into Expression (9) (step S307).

Next, the controller 21 causes the drive section 12 to change the arrangement direction Φ of the sensor elements 11 by 90° (step S308). That is, as illustrated in FIG. 10B, the controller 21 sets the arrangement direction Φ of the sensor elements 11 to an in-plane direction (y-direction) in which the object S exhibits acoustic anisotropy.

Since the subsequent steps S309 to S311 are substantially the same as the steps S302 to S304, the detailed description thereof will be omitted. That is, the controller 21 sets the arrangement spacing L and transmits and receives an ultrasonic wave, thereby calculating the magnitude Vc and the input angle θ of one propagation velocity vector in a cross section including that direction using Expressions (7) and (8). The controller 21 determines the propagation wavefront shape model expressed by Expression (10) (step S312). The controller 21 calculates the horizontal propagation velocity Vb by substituting the magnitude Vc and the input angle θ of the propagation velocity vector, and the vertical propagation velocity Va calculated in step S307 into Expression (10) (step S313).

[Effects of Fifth Embodiment]

As described above, in the propagation velocity calculation processing according to the fifth embodiment, the transmitter 11a and the receiver 11b are disposed in an acoustically isotropic in-plane direction of the object S having uniaxial acoustic anisotropy to calculate a plurality of propagation velocity vectors, and an actual thickness value of the object S and the vertical propagation velocity Va perpendicular to the first surface S1 are calculated based on the propagation velocity vectors. The transmitter 11a and the receiver 11b are disposed in an acoustically anisotropic in-plane direction of the object S to calculate a propagation velocity vector, and the horizontal propagation velocity Vb in the acoustically anisotropic plane is calculated based on the propagation velocity vector, the vertical propagation velocity Va and a propagation wavefront shape model corresponding to the acoustic anisotropy of the object S. According to this configuration, it is possible to measure not only the horizontal propagation velocity Vb of the uniaxial anisotropic substance but also the thickness information D and the vertical propagation velocity Va.

[Modification Example of Fifth Embodiment]

In the description above, since the thickness of the object S is unknown, a plurality of ultrasonic waves is received for different arrangement spacings in the acoustically isotropic in-plane direction from steps S302 to S305. In contrast, when the thickness information D of the object S is known, only the vertical propagation time ta is acquired in that direction, and the vertical propagation velocity Va can be calculated using Expression (9). That is, when the thickness of the object S is known, the sensor elements 11 may be arranged in the acoustically isotropic in-plane direction of the object S, the ultrasonic wave may be received once by the receiver 11b disposed at the same position as the transmitter 11a, the propagation time may be measured, and the vertical propagation velocity Va may be calculated.

[Sixth Embodiment]

[Multidirectional Horizontal Propagation Velocity Calculation Processing; Axis Directions Unknown/Thickness Unknown]

Next, propagation velocity calculation processing according to a sixth embodiment will be described. In the fifth embodiment, the object S is a substance having uniaxial acoustic anisotropy, the two acoustic anisotropy axes are parallel to the first surface S1, and the axis directions are known, that is, the plane direction exhibiting the acoustic isotropy is known. In contrast, the present embodiment is different in that the directions of the acoustic anisotropy axes of the object S are unknown, that is, the plane direction exhibiting the acoustic isotropy is unknown.

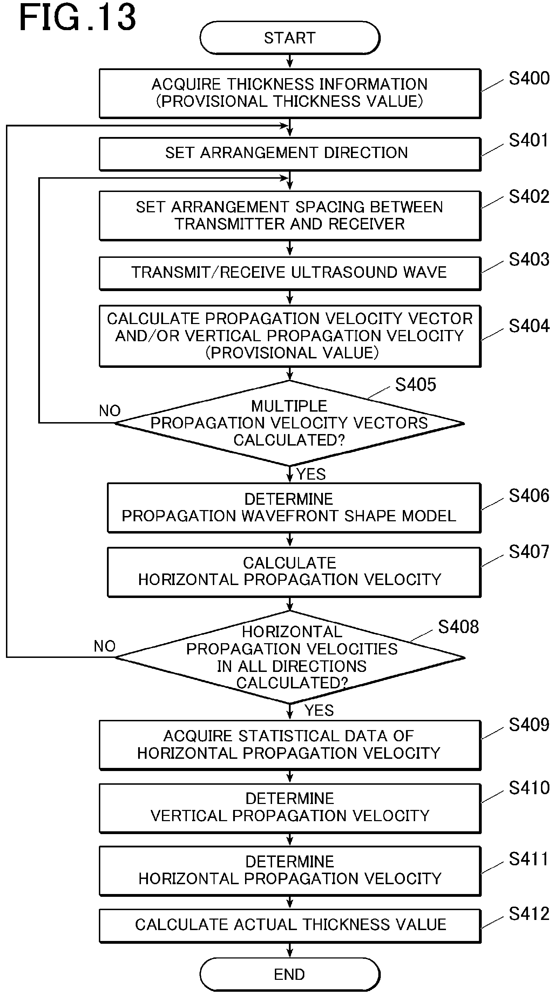

The propagation velocity calculation processing according to the sixth embodiment will be described with reference to the flowchart in FIG. 13. In the present embodiment, it is assumed that the thickness information of the object S is unknown. In the following description, the same contents as those in FIG. 8 will not be described in detail, and different points will be mainly described.

The controller 21 acquires a provisional thickness value as the thickness information D of the object S (step S400). The controller 21 controls the drive section 12 to set the arrangement direction Φ of the sensor elements 11 to a predetermined direction (step S401).

Subsequent step S402 to step S407 are substantially the same as step S202 to step S207 of FIG. 8, and thus detailed description thereof will be omitted. That is, the controller 21 receives a plurality of ultrasonic waves for different arrangement spacings in one predetermined direction Φ, thereby calculating a plurality of propagation velocity vectors in a cross section including the direction Φ. Then, a horizontal propagation velocity Vh(Φ) in the arrangement direction Φ is calculated based on the plurality of propagation velocity vectors. In this step, it is assumed that one of the plurality of propagation velocity vectors includes a provisional value Va' (input angle θ = 0°) of the vertical propagation velocity based on the provisional thickness value (step S404).

After completion of step S407, the controller 21 determines whether the horizontal propagation velocities Vh(Φ) in all directions in a desired measurement range have been calculated (step S408).

If the horizontal propagation velocities Vh(Φ) in all directions in the desired measurement range have not been calculated (step S408; No), the processing is advanced to step S401, the arrangement direction Φ is changed, and the horizontal propagation velocity Vh(Φ) is calculated again.

If the horizontal propagation velocities Vh(Φ) in all directions in the desired measurement range have been calculated (step S408; Yes), the controller 21 analyzes a relationship between the plurality of horizontal propagation velocities Vh(Φ) and the positional arrangements and the arrangement directions Φ of the sensor elements 11 corresponding to the respective horizontal propagation velocities Vh(Φ).

To be specific, the controller 21, which serves as the analysis section 21f, acquires statistical data of the horizontal propagation velocity Vh(Φ) corresponding to the arrangement direction Φ (step S409) for each positional arrangement of the sensor elements 11. The statistical data includes at least one of a maximum value, a minimum value, an average value, a variance value, and a principal component analysis result of the horizontal propagation velocity Vh(Φ).

After the acquisition of the statistical data of the horizontal propagation velocity Vh(Φ), the controller 21 determines the vertical propagation velocity Va and the horizontal propagation velocity Vb based on the statistical data. When two of the acoustic anisotropy axes of the object S are parallel to the first surface S1, for example, the propagation wavefront shape model in the cross section of the object S has an elliptical shape, and the horizontal propagation velocity Vh(Φ) with respect to the arrangement direction Φ similarly varies in an elliptical pattern. In this case, the vertical propagation velocity Va matches either the maximum or minimum value of the horizontal propagation velocity Vh(Φ), and the horizontal propagation velocity Vb matches either the maximum or minimum value of the horizontal propagation velocity Vh(Φ) that is different from the vertical propagation velocity Va. Therefore, the maximum or minimum value of the horizontal propagation velocity Vh(Φ) that is closest to the provisional value Va' of the vertical propagation velocity calculated in step S404 is set as the vertical propagation velocity Va (actual value) (step S410). Further, the value with the larger difference from Va' is set as the horizontal propagation velocity Vb (step S411).

After the determination of the vertical propagation velocity Va, the controller 21 calculates the actual thickness value based on the determined vertical propagation velocity Va and Expression (9) (step S412).

[Effects of Sixth Embodiment]

For example, when the object S is a composite material such as CFRP, the direction of the acoustic anisotropy axis may change depending on the blending state of the contained filler. In other words, by knowing the direction of the acoustic anisotropy axis, it is possible to know the blending state of the contained filler and thus estimate the strength properties of the object S. As described above, according to the configuration of the sixth embodiment, since the arrangement direction dependency of the horizontal propagation velocity Vb can be acquired, the strength properties of the object S can be evaluated based on the acquired arrangement direction dependency.

[Modification Example of Sixth Embodiment]

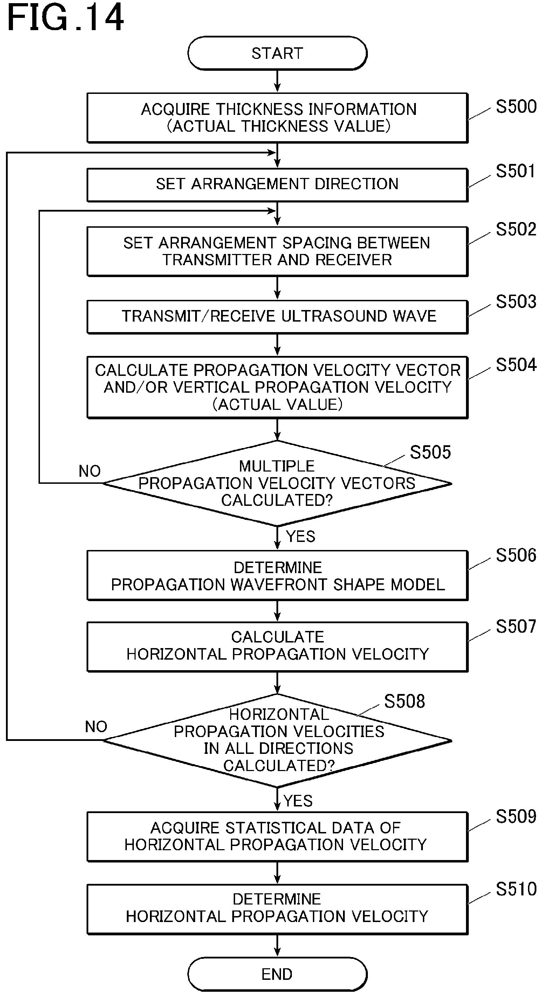

In the description above, since the thickness of the object S is unknown, the vertical propagation velocity Va and the horizontal propagation velocity Vb are determined based on the statistical data and the provisional value Va' of the vertical propagation velocity. In contrast, the propagation velocity calculation processing when the thickness information D of the object S is known will be described with reference to the flowchart in FIG. 14. Note that in the following description, step S501 to step S503 and step S505 to step S509 are substantially the same as step S401 to step S403 and step S405 to step S409 in FIG. 13, and thus detailed description thereof will be omitted, and differences will be mainly described.

The controller 21 acquires the actual thickness value as the thickness information D of the object S (step S500). When the thickness information D is known, the vertical propagation velocity Va can be directly calculated using Expression (9) by acquiring the vertical propagation time ta (step S504). As a result, the horizontal propagation velocity Vb can be calculated more simply by selecting statistical data other than that corresponding to the vertical propagation velocity Va (step S510).

[Other Modification Examples of Fifth Embodiment and Sixth Embodiment]

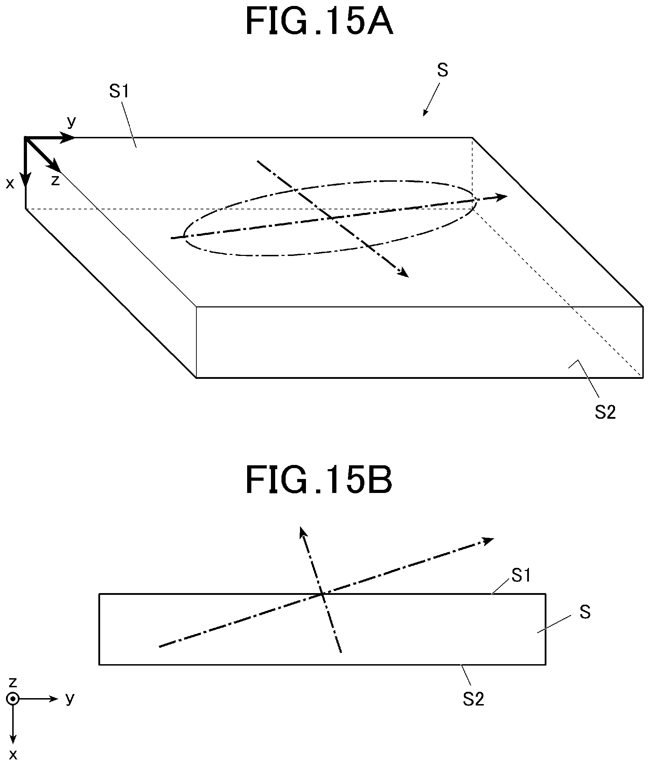

Although the case where two of the acoustic anisotropy axes of the object S are parallel to the first surface S1 has been described above, the present invention is not limited thereto. As illustrated in FIG. 15A and FIG. 15B, when the acoustic anisotropy axes are not parallel to the first surface S1, the horizontal propagation velocity Vb and the vertical propagation velocity Va cannot be quantitatively known. However, by calculating the horizontal propagation velocity Vh($\Phi$) dependent on the arrangement direction, it is possible to qualitatively grasp an approximate axis direction and the like of the acoustic anisotropy of the object S and thus to predict the strength properties.

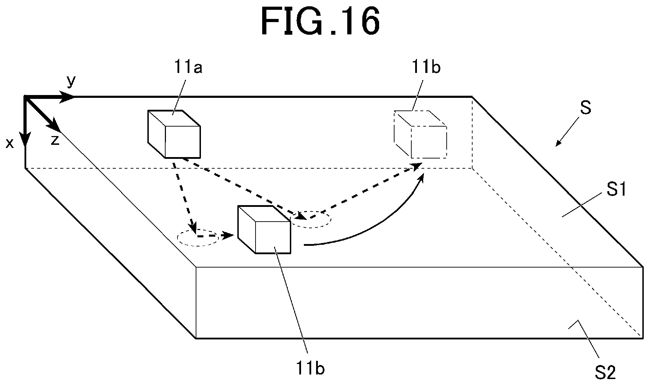

Furthermore, although the case where the sensor elements 11 constitute an array-type sensor has been illustrated in FIG. 10A and FIG. 10B, as illustrated in FIG. 16, the sensor elements 11 may include a plurality of independent sensor elements as in FIG. 9A. In the above-described configuration, the controller 21 moves one or both of the sensor elements by the two-dimensional movement mechanism of the drive section 12, thereby setting the arrangement direction $\Phi$ of the transmitter 11a and the receiver 11b.

Furthermore, although the transmitter 11a and the receiver 11b are disposed on the first surface S1 in FIG. 16, one of the transmitter 11a and the receiver 11b may be disposed on the second surface S2 also in the fifth and sixth embodiments as in FIG. 9B.

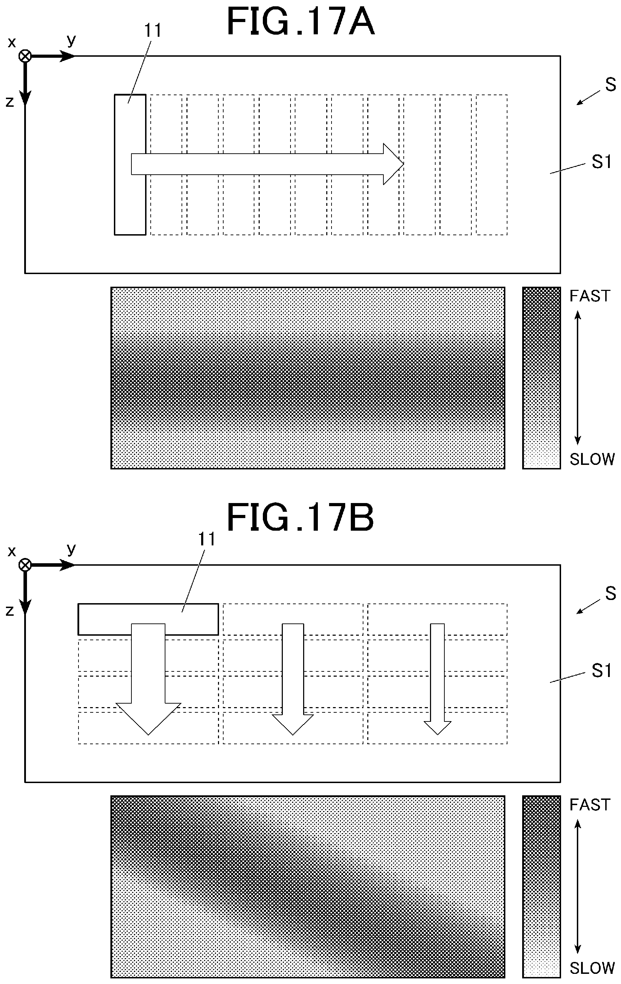

Furthermore, based on the analysis result of the analysis section 21f, the controller 21 may display, on the display part 23, a velocity map or the like in which the position dependence and the direction dependence of the horizontal propagation velocity in the object S are visualized, as illustrated in FIGS. 17A to 17C.

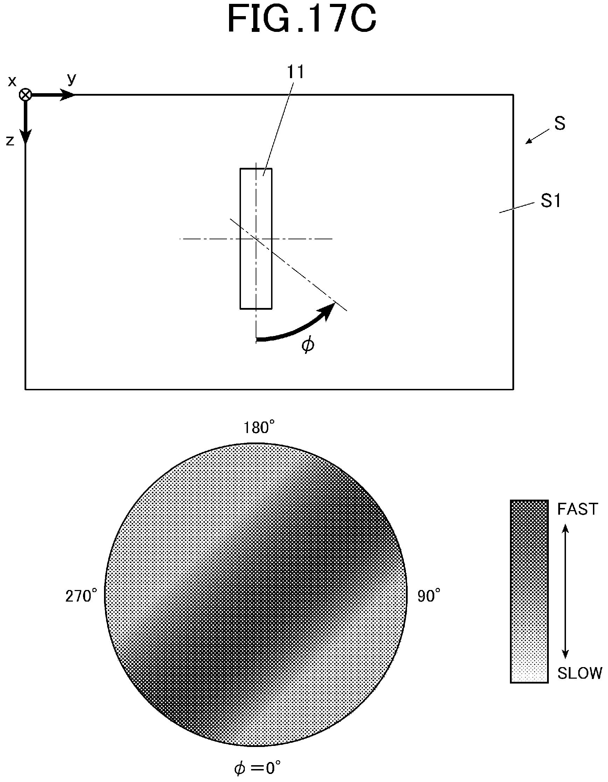

FIG. 17A is an example of a two-dimensional map of the horizontal propagation velocity in the z-direction. FIG. 17B is an example of a two-dimensional map of the horizontal propagation velocity in the y-direction. FIG. 17C is an example of a two-dimensional map illustrating the direction dependency of the horizontal propagation velocity. In FIGS. 17A to 17C, regions where the horizontal propagation velocity of ultrasonic waves is relatively fast are shown in dark shades, while regions where the horizontal propagation velocity of ultrasonic waves is relatively slow are shown in light shades. From these maps, it is found that the horizontal propagation velocity is not constant with respect to the position or direction and is partially faster, indicating that there is a variation in the elastic strength in the velocity measurement direction. In particular, since the horizontal propagation velocity is faster in the 135° direction in FIG. 17C, it is found that the elastic strength increases in the direction. Such information is known to be closely related to the orientation state of the contained filler in a fiber reinforced plastic such as CFRTP, for example, and provides useful information when considering the filler blending and shaping method.

Furthermore, although the velocity map in which the degree of orientation in the object S is two-dimensionally displayed is illustrated in FIGS. 17A to 17C, a three-dimensional velocity map may be displayed, for example, when the object S does not have acoustic anisotropy axes on the first surface S1.

[Other Configurations]

Although specific descriptions have been given above based on the embodiments according to the present invention, the present invention is not limited to the above-described embodiments. The present invention can be subjected to various modifications within the scope of the invention described in the claims and the equivalents thereof.

For example, in FIGS. 2, 4B, 10A, and 10B, the array-type sensor in which the sensor elements 11 including the transmitter 11a and the receiver 11b are arranged in a one-dimensional array is exemplified, but the present invention is not limited thereto.

For example, a matrix sensor in which a plurality of sensor elements 11 are arranged in a two-dimensional array (in a matrix) may be adopted. In the above-described configuration, without physically moving the sensor elements by the drive section 12, the transmitter 11a and the receiver 11b can be disposed at any position and/or direction in the object S by electronically selecting the sensor elements to transmit and receive ultrasonic waves.

Further, in the above description, an example in which a ROM is used as a computer-readable medium of the program according to the present invention has been disclosed, but the present invention is not limited to this example. As another computer-readable medium, a nonvolatile memory such as a flash memory or a portable recording medium such as a CD-ROM can be applied. As a medium for providing data of the program according to the present invention via a communication line, a carrier wave is also applied to the present invention.

Industrial Applicability

The present invention can be used for a wave propagation velocity measuring method, a wave propagation velocity measuring apparatus, and a program that can more simply measure a propagation velocity of an elastic wave in a predetermined direction of an object having acoustic anisotropy.

Reference Signs List

100 wave propagation velocity measuring apparatus
10 sensor
11 sensor elements
11a transmitter
11b receiver
12 drive section
20 processing device
21 controller
21a propagation time measurement section
21b transmission/reception spacing adjustment section
21c propagation velocity vector calculation section
21d propagation wavefront shape model determination section
21e propagation velocity calculation section
21f analysis section
22 signal generating section
23 display part
24 operation input section
25 storage section
D thickness information
L arrangement spacing
t propagation time of an ultrasonic wave
Va vertical propagation velocity
Vb horizontal propagation velocity
Vc propagation velocity vector (magnitude)
θ input angle of an ultrasonic wave
S object
S1 first surface
S2 second surface

**Claims**

1. A wave propagation velocity measuring method comprising:

   transmitting, by a transmitter disposed on a first surface of an object having acoustic anisotropy, an elastic wave to the first surface;
   acquiring two or more pieces of reception information by receiving, by a receiver disposed on the first surface of the object or a second surface facing the first surface, respective two or more of the elastic wave propagating at respective different angles within the object;
   calculating two or more propagation velocity vectors based on the respective two or more pieces of reception information;
   determining a propagation wavefront shape model corresponding to the acoustic anisotropy of the object based on the two or more propagation velocity vectors; and
   calculating a horizontal propagation velocity parallel to the first surface based on the propagation wavefront shape model.

2. The wave propagation velocity measuring method according to claim 1, wherein

   the two or more pieces of reception information include information on respective propagation times of the respective two or more of the elastic wave propagating within the object, and
   the calculating the two or more propagation velocity vectors includes calculating the two or more propagation velocity vectors based on the respective two or more pieces of reception information, information on respective two or more arrangement spacings between the transmitter and the receiver in a direction parallel to the first surface, and thickness information of the object.

3. The wave propagation velocity measuring method according to claim 1, further comprising calculating the propagation wavefront shape model based on the two or more propagation velocity vectors.

4. The wave propagation velocity measuring method according to claim 1, further comprising selecting the propagation wavefront shape model from a plurality of propagation wavefront shape model candidates based on the two or more propagation velocity vectors.

5. The wave propagation velocity measuring method according to claim 2, wherein the thickness information of the object is either a provisional thickness value that is a provisional length of the object in a thickness direction or an actual thickness value that is an actual length of the object in the thickness direction.

6. The wave propagation velocity measuring method according to claim 5, wherein, when the thickness information of the object is the actual thickness value, the method further comprises calculating, in addition to the horizontal propagation velocity, a vertical propagation velocity perpendicular to the first surface.

7. The wave propagation velocity measuring method according to claim 2, wherein the acquiring the two or more pieces of reception information includes adjusting the respective two or more arrangement spacings between the transmitter and the receiver.

8. The wave propagation velocity measuring method according to claim 7, wherein the adjusting includes selecting from a plurality of sensor elements for transmitting and/or receiving pre-disposed at predetermined positions and/or in a predetermined shape.

9. The wave propagation velocity measuring method according to claim 1, wherein

the acoustic anisotropy of the object is uniaxial acoustic anisotropy, and
the method further comprises:

calculating a first propagation velocity vector with the transmitter and the receiver disposed in an acoustically isotropic in-plane direction in which the object exhibits acoustic isotropy;
calculating a vertical propagation velocity perpendicular to the first surface based on the first propagation velocity vector;
calculating a second propagation velocity vector with the transmitter and the receiver disposed in a direction in an acoustically anisotropic plane, the object exhibiting the acoustic anisotropy in the direction; and
calculating a horizontal propagation velocity in the acoustically anisotropic plane based on the vertical propagation velocity, the second propagation velocity vector, and the propagation wavefront shape model corresponding to the acoustic anisotropy of the object.

10. The wave propagation velocity measuring method according to claim 1, further comprising:

changing a positional arrangement of the transmitter and the receiver and/or an arrangement direction of the transmitter and the receiver; and
measuring the horizontal propagation velocity for each of the positional arrangement and/or the arrangement direction.

11. The wave propagation velocity measuring method according to claim 10, further comprising analyzing the horizontal propagation velocity corresponding to the positional arrangement and/or the arrangement direction.

12. The wave propagation velocity measuring method according to claim 11, further comprising acquiring statistical data that includes at least one of a maximum value, a minimum value, an average value, a variance value, or a principal component analysis result of the horizontal propagation velocity corresponding to the arrangement direction for each of the positional arrangement.

13. The wave propagation velocity measuring method according to claim 12, further comprising deriving an arrangement direction in which the horizontal propagation velocity becomes a maximum value and/or a minimum value for each of the positional arrangement.

14. The wave propagation velocity measuring method according to claim 10, further comprising displaying the positional arrangement and/or the arrangement direction, and a magnitude of the horizontal propagation velocity in association with each other.

15. The wave propagation velocity measuring method according to any one of claims 1 to 14, wherein a plurality of acoustic elements integrally formed and disposed in a line or a matrix includes the transmitter and/or the receiver.

16. The wave propagation velocity measuring method according to any one of claims 1 to 14, wherein the propagation wavefront shape model has an elliptical shape in an acoustically anisotropic plane of the object.

17. A wave propagation velocity measuring apparatus comprising:

a transmitter that is disposed on a first surface of an object having acoustic anisotropy and inputs an elastic wave to the first surface;
a receiver that is disposed on the first surface or a second surface facing the first surface of the object and receives two or more of the elastic wave propagating at respective different angles within the object to output respective two or more pieces of reception information;
a propagation velocity vector calculation section that calculates two or more propagation velocity vectors based on the respective two or more pieces of reception information;
a propagation wavefront shape model determination section that determines a propagation wavefront shape model corresponding to the acoustic anisotropy of the object based on the two or more propagation velocity vectors; and
a propagation velocity calculation section that calculates a horizontal propagation velocity parallel to the first surface based on the propagation wavefront shape model.

18. A program that causes a computer of a wave propagation velocity measuring apparatus including:

a transmitter that is disposed on a first surface of an object having acoustic anisotropy and inputs an elastic wave to the first surface; and
a receiver that is disposed on the first surface or a second surface facing the first surface of the object and receives two or more of the elastic wave propagating at respective different angles within the object to output respective two or more pieces of reception information to function as:

a propagation velocity vector calculation section that calculates two or more propagation velocity vectors based on the respective two or more pieces of reception information;
a propagation wavefront shape model determination section that determines a propagation wavefront shape model corresponding to the acoustic anisotropy of the object based on the two or more propagation velocity vectors; and
a propagation velocity calculation section that calculates a horizontal propagation velocity parallel to the first surface based on the propagation wavefront shape model.

# FIG.1

WAVE PROPAGATION VELOCITY MEASURING APPARATUS — 100

**SENSOR** — 10

**SENSOR ELEMENTS** — 11

TRANSMITTER — 11a

RECEIVER — 11b

DRIVE SECTION — 12

S, S1, S2, OBJECT

**PROCESSING DEVICE** — 20

SIGNAL GENERATING SECTION — 22

**CONTROLLER** — 21

PROPAGATION TIME MEASUREMENT SECTION — 21a

PROPAGATION VELOCITY VECTOR CALCULATION SECTION — 21c

PROPAGATION WAVEFRONT SHAPE MODEL DETERMINATION SECTION — 21d

PROPAGATION VELOCITY CALCULATION SECTION — 21e

TRANSMISSION/ RECEPTION SPACING ADJUSTMENT SECTION — 21b

ANALYSIS SECTION — 21f

DISPLAY PART — 23

STORAGE SECTION — 25

OPERATION INPUT SECTION — 24

EP 4 756 389 A1

# FIG.2

# FIG.3

```
START
  │
  ▼
```

ACQUIRE THICKNESS INFORMATION
(ACTUAL THICKNESS VALUE) —— S100

SET ARRANGEMENT SPACING BETWEEN
TRANSMITTER AND RECEIVER —— S102

TRANSMIT/RECEIVE ULTRASOUND WAVE —— S103

CALCULATE
PROPAGATION VELOCITY VECTOR —— S104

MULTIPLE
PROPAGATION VELOCITY VECTORS
CALCULATED? —— S105

NO

YES

DETERMINE
PROPAGATION WAVEFRONT SHAPE MODEL —— S106

CALCULATE
HORIZONTAL PROPAGATION VELOCITY —— S107

END

# FIG.4A

# FIG.4B

# FIG.5

# FIG.6

**WAVE PROPAGATION VELOCITY MEASURING APPARATUS** 100

**SENSOR** 10

**SENSOR ELEMENTS** 11

TRANSMITTER 11a

RECEIVER 11b

DRIVE SECTION 12

**PROCESSING DEVICE** 20

SIGNAL GENERATING SECTION 22

**CONTROLLER** 21

PROPAGATION TIME MEASUREMENT SECTION 21a

PROPAGATION VELOCITY VECTOR CALCULATION SECTION 21c

PROPAGATION WAVEFRONT SHAPE MODEL DETERMINATION SECTION 21d

PROPAGATION VELOCITY CALCULATION SECTION 21e

ANALYSIS SECTION 21f

TRANSMISSION/ RECEPTION SPACING ADJUSTMENT SECTION 21b

DISPLAY PART 23

OPERATION INPUT SECTION 24

STORAGE SECTION 25

PROPAGATION WAVEFRONT SHAPE MODEL CANDIDATES

S

OBJECT

S2  S1

EP 4 756 389 A1

# FIG.7

```
┌─────────────────┐
│      START      │
└─────────────────┘
         │
         ▼
┌─────────────────────────────────────────┐
│   ACQUIRE THICKNESS INFORMATION          │──── S1000
│   (ACTUAL THICKNESS VALUE)               │
└─────────────────────────────────────────┘
         │
         ▼
┌─────────────────────────────────────────┐
│  SET (MULTIPLE) ARRANGEMENT SPACINGS     │──── S1002
│  BETWEEN TRANSMITTER AND RECEIVER        │
└─────────────────────────────────────────┘
         │
         ▼
┌─────────────────────────────────────────┐
│  TRANSMIT/RECEIVE (MULTIPLE)             │──── S1003
│  ULTRASOUND WAVES                        │
└─────────────────────────────────────────┘
         │
         ▼
┌─────────────────────────────────────────┐
│  CALCULATE                               │──── S1004
│  (MULTIPLE) PROPAGATION VELOCITY VECTORS │
└─────────────────────────────────────────┘
         │
         ▼
┌─────────────────────────────────────────┐
│  DETERMINE                               │──── S1006
│  PROPAGATION WAVEFRONT SHAPE MODEL       │
└─────────────────────────────────────────┘
         │
         ▼
┌─────────────────────────────────────────┐
│  CALCULATE                               │──── S1007
│  HORIZONTAL PROPAGATION VELOCITY         │
└─────────────────────────────────────────┘
         │
         ▼
┌─────────────────┐
│       END       │
└─────────────────┘
```

# FIG.8

START

ACQUIRE THICKNESS INFORMATION
(PROVISIONAL THICKNESS VALUE) ⟋ S200

SET ARRANGEMENT SPACING BETWEEN
TRANSMITTER AND RECEIVER ⟋ S202

TRANSMIT/RECEIVE ULTRASOUND WAVE ⟋ S203

CALCULATE
PROPAGATION VELOCITY VECTOR ⟋ S204

S205

MULTIPLE
PROPAGATION VELOCITY VECTORS
CALCULATED?

NO

YES

DETERMINE
PROPAGATION WAVEFRONT SHAPE MODEL ⟋ S206

CALCULATE
HORIZONTAL PROPAGATION VELOCITY ⟋ S207

END

# FIG.9A

# FIG.9B

# FIG.10A

# FIG.10B

# FIG.11

```
                    ┌─────────────┐
                    │    START    │
                    └─────────────┘
                           │
                           ▼
        ┌──────────────────────────────────┐
        │  ACQUIRE THICKNESS INFORMATION    │── S300
        │   (PROVISIONAL THICKNESS VALUE)   │
        └──────────────────────────────────┘
                           │
                           ▼
        ┌──────────────────────────────────┐
        │     SET ARRANGEMENT DIRECTION     │── S301
        └──────────────────────────────────┘
                           │
                           ▼
        ┌──────────────────────────────────┐
        │  SET ARRANGEMENT SPACING BETWEEN  │── S302
        │     TRANSMITTER AND RECEIVER      │
        └──────────────────────────────────┘
                           │
                           ▼
        ┌──────────────────────────────────┐
        │  TRANSMIT/RECEIVE ULTRASOUND WAVE │── S303
        └──────────────────────────────────┘
                           │
                           ▼
        ┌──────────────────────────────────┐
        │            CALCULATE              │── S304
        │   PROPAGATION VELOCITY VECTOR     │
        └──────────────────────────────────┘
                           │
                           ▼
        ┌──────────────────────────────────┐
   NO   ◇           MULTIPLE              ◇── S305
 ◄──────│  PROPAGATION VELOCITY VECTORS     │
        │          CALCULATED?              │
        └──────────────────────────────────┘
                           │ YES
                           ▼
        ┌──────────────────────────────────┐
        │   CALCULATE ACTUAL THICKNESS VALUE│── S306
        └──────────────────────────────────┘
                           │
                           ▼
        ┌──────────────────────────────────┐
        │            CALCULATE              │── S307
        │   VERTICAL PROPAGATION VELOCITY   │
        └──────────────────────────────────┘
                           │
                           ▼
        ┌──────────────────────────────────┐
        │    CHANGE ARRANGEMENT DIRECTION   │── S308
        └──────────────────────────────────┘
                           │
                           ▼
        ┌──────────────────────────────────┐
        │  SET ARRANGEMENT SPACING BETWEEN  │── S309
        │     TRANSMITTER AND RECEIVER      │
        └──────────────────────────────────┘
                           │
                           ▼
        ┌──────────────────────────────────┐
        │  TRANSMIT/RECEIVE ULTRASOUND WAVE │── S310
        └──────────────────────────────────┘
                           │
                           ▼
        ┌──────────────────────────────────┐
        │            CALCULATE              │── S311
        │   PROPAGATION VELOCITY VECTOR     │
        └──────────────────────────────────┘
                           │
                           ▼
        ┌──────────────────────────────────┐
        │            DETERMINE              │── S312
        │  PROPAGATION WAVEFRONT SHAPE MODEL │
        └──────────────────────────────────┘
                           │
                           ▼
        ┌──────────────────────────────────┐
        │            CALCULATE              │── S313
        │  HORIZONTAL PROPAGATION VELOCITY  │
        └──────────────────────────────────┘
                           │
                           ▼
                    ┌─────────────┐
                    │     END     │
                    └─────────────┘
```

# FIG.12

# FIG.13

START

ACQUIRE THICKNESS INFORMATION (PROVISIONAL THICKNESS VALUE) — S400

SET ARRANGEMENT DIRECTION — S401

SET ARRANGEMENT SPACING BETWEEN TRANSMITTER AND RECEIVER — S402

TRANSMIT/RECEIVE ULTRASOUND WAVE — S403

CALCULATE PROPAGATION VELOCITY VECTOR AND/OR VERTICAL PROPAGATION VELOCITY (PROVISIONAL VALUE) — S404

MULTIPLE PROPAGATION VELOCITY VECTORS CALCULATED? — S405
NO
YES

DETERMINE PROPAGATION WAVEFRONT SHAPE MODEL — S406

CALCULATE HORIZONTAL PROPAGATION VELOCITY — S407

HORIZONTAL PROPAGATION VELOCITIES IN ALL DIRECTIONS CALCULATED? — S408
NO
YES

ACQUIRE STATISTICAL DATA OF HORIZONTAL PROPAGATION VELOCITY — S409

DETERMINE VERTICAL PROPAGATION VELOCITY — S410

DETERMINE HORIZONTAL PROPAGATION VELOCITY — S411

CALCULATE ACTUAL THICKNESS VALUE — S412

END

# FIG.14

```
                    ┌──────────────┐
                    │    START     │
                    └──────┬───────┘
                           │
   ┌───────────────────────▼───────────────────────┐
   │      ACQUIRE THICKNESS INFORMATION             │──── S500
   │          (ACTUAL THICKNESS VALUE)              │
   └───────────────────────┬───────────────────────┘
                           │
   ┌───────────────────────▼───────────────────────┐
   │           SET ARRANGEMENT DIRECTION            │──── S501
   └───────────────────────┬───────────────────────┘
                           │
   ┌───────────────────────▼───────────────────────┐
   │     SET ARRANGEMENT SPACING BETWEEN            │──── S502
   │         TRANSMITTER AND RECEIVER               │
   └───────────────────────┬───────────────────────┘
                           │
   ┌───────────────────────▼───────────────────────┐
   │       TRANSMIT/RECEIVE ULTRASOUND WAVE         │──── S503
   └───────────────────────┬───────────────────────┘
                           │
   ┌───────────────────────▼───────────────────────┐
   │  CALCULATE PROPAGATION VELOCITY VECTOR         │──── S504
   │  AND/OR VERTICAL PROPAGATION VELOCITY          │
   │              (ACTUAL VALUE)                    │
   └───────────────────────┬───────────────────────┘
                           │
                  NO       ▼
              ◇────────────────────────◇  S505
              │    MULTIPLE            │
              │ PROPAGATION VELOCITY   │
              │ VECTORS CALCULATED?    │
              ◇────────────┬───────────◇
                           │ YES
   ┌───────────────────────▼───────────────────────┐
   │            DETERMINE                           │──── S506
   │  PROPAGATION WAVEFRONT SHAPE MODEL             │
   └───────────────────────┬───────────────────────┘
                           │
   ┌───────────────────────▼───────────────────────┐
   │            CALCULATE                           │──── S507
   │   HORIZONTAL PROPAGATION VELOCITY              │
   └───────────────────────┬───────────────────────┘
                           │
                  NO       ▼           S508
              ◇────────────────────────◇
              │    HORIZONTAL         │
              │ PROPAGATION VELOCITIES│
              │   IN ALL DIRECTIONS   │
              │     CALCULATED?       │
              ◇────────────┬───────────◇
                           │ YES
   ┌───────────────────────▼───────────────────────┐
   │     ACQUIRE STATISTICAL DATA OF                │──── S509
   │   HORIZONTAL PROPAGATION VELOCITY              │
   └───────────────────────┬───────────────────────┘
                           │
   ┌───────────────────────▼───────────────────────┐
   │            DETERMINE                           │──── S510
   │   HORIZONTAL PROPAGATION VELOCITY              │
   └───────────────────────┬───────────────────────┘
                           │
                    ┌──────▼───────┐
                    │     END      │
                    └──────────────┘
```

# FIG.15A

# FIG.15B

# FIG.16

# FIG.17A

# FIG.17B

# FIG.17C

## INTERNATIONAL SEARCH REPORT

| International application No. |
|---|
| **PCT/JP2024/024159** |

| A. | CLASSIFICATION OF SUBJECT MATTER |
|---|---|

***G01H 5/00***(2006.01)i; ***G01N 29/07***(2006.01)i; ***G01N 29/44***(2006.01)i
FI:    G01H5/00; G01N29/44; G01N29/07

According to International Patent Classification (IPC) or to both national classification and IPC

| B. | FIELDS SEARCHED |
|---|---|

Minimum documentation searched (classification system followed by classification symbols)

G01H1/00-17/00; G01N29/00-29/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 104483385 A (BEIJING INSTITUTE OF AERONAUTICAL MATERIALS, AVIATION INDUSTRY CORPORATION OF CHINA) 01 April 2015 (2015-04-01) paragraphs [0070], [0083], fig. 1 | 1-8, 10-15, 17-18 |
| A | | 9, 16 |
| Y | JP 2-296147 A (NKK CORP.) 06 December 1990 (1990-12-06) page 3, lower right column, lines 1-9 | 1-8, 10-15, 17-18 |
| Y | JP 62-207441 A (KABUSHIKI KAISHA TOSHIBA) 11 September 1987 (1987-09-11) page 13, lower left column, line 8 to lower right column, line 17, page 14, lower right column, lines 9-12 | 14 |
| A | JP 7-174736 A (NIPPON STEEL CORPORATION) 14 July 1995 (1995-07-14) paragraph [0017], fig. 4 | 1-18 |
| A | JP 2000-55891 A (NKK CORP.) 25 February 2000 (2000-02-25) fig. 6 | 1-18 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/024159** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2008-286622 A (IHI AEROSPACE CO., LTD.) 27 November 2008 (2008-11-27)<br>fig. 1 | 1-18 |
| A | Microfilm of the specification and drawings annexed to the request of Japanese Utility Model Application No. 87577/1985 (Laid-open No. 203359/1986) (NIPPON STEEL CORPORATION) 20 December 1986 (1986-12-20), fig. 1 | 1-18 |
| A | US 5408882 A (GENERAL ELECTRIC COMPANY) 25 April 1995 (1995-04-25)<br>fig. 4, 6 | 1-18 |

Form PCT/ISA/210 (second sheet) (July 2022)

## INTERNATIONAL SEARCH REPORT
### Information on patent family members

International application No.

**PCT/JP2024/024159**

| Patent document cited in search report | | | Publication date (day/month/year) | Patent family member(s) | Publication date (day/month/year) |
|---|---|---|---|---|---|
| CN | 104483385 | A | 01 April 2015 | (Family: none) | |
| JP | 2-296147 | A | 06 December 1990 | (Family: none) | |
| JP | 62-207441 | A | 11 September 1987 | (Family: none) | |
| JP | 7-174736 | A | 14 July 1995 | (Family: none) | |
| JP | 2000-55891 | A | 25 February 2000 | EP 981047 A2 fig. 17 | |
| JP | 2008-286622 | A | 27 November 2008 | (Family: none) | |
| JP | 61-203359 | U1 | 20 December 1986 | (Family: none) | |
| US | 5408882 | A | 25 April 1995 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008286622 A

- JP 2007127547 A